# EUROPEAN PATENT APPLICATION

(11) **EP 4 675 250 A1**
(43) Date of publication of application: **07.01.2026**
(21) Application number: 24763921.4
(22) Date of filing: 27.02.2024
(51) Int. Cl.: G01N 1/28, G01N 1/36

(54) **EMBEDDING CONTAINER, EMBEDDING METHOD, AND EMBEDDING DEVICE**

(30) Priority: 27.02.2023 JP 2023028539
(71) Applicant: Nikon Corporation, Tokyo 140-8601 (JP)
(72) Inventor: ISHIZAWA Naoya, Tokyo 108-6290 (JP); TAKUBO Makiko, Tokyo 108-6290 (JP); KOBAYASHI Ryo, Tokyo 108-6290 (JP); KAWANO Takeshi, Tokyo 108-6290 (JP); TANAKA Shuhei, Tokyo 108-6290 (JP); SAKAGAMI Junko, Tokyo 108-6290 (JP)
(74) Representative: Hoffmann Eitle
(86) International application number: PCT/JP2024/007104
(87) International publication number: WO 2024/181442

(57) **Abstract**

There is provided an embedding container. The embedding container according to an embodiment of the present application accommodates a subject to be embedded and is used to be cut along with the subject, and a proximate plane to the subject at an arrangement location to arrange the subject thereon has a cross-section different from that of a plane adjacent to the proximate plane. In addition, there is also provided an embedding method comprising: arranging the subject in the embedding container; and embedding the subject and the embedding container as a whole. Moreover, there is also provided an embedding apparatus, comprising: a moving unit which moves the embedding container; and an introduction unit which introduces a processing solution and/or an embedding agent into the embedding container.

## Description

### TECHNICAL FIELD

The present invention relates to an embedding container, as well as to an embedding method and an embedding apparatus using the embedding container.

### BACKGROUND ART

In studies in cell biology or medical science, a cell, a tissue, or the like is fixed with formalin and embedded in paraffin to create a specimen. For example, Patent Document 1 discloses a "tissue cassette assembly for embedding a cell block". A further approach is needed for a method of embedding cells or tissues.

### PATENT DOCUMENTS

Patent Document 1: Japanese Patent No. 5204810.

### GENERAL DISCLOSURE

There is provided an embedding container. The embedding container may accommodate a subject to be embedded. The embedding container may be used to be cut along with the subject. Any embedding container described above may include a holding member which holds the subject and through which an embedding agent to embed the subject can pass. Any holding member described above may be embedded along with the subject by the embedding agent. Any holding member described above may be embedded in a state in which it is in contact with the subject. In any embedding container described above, a proximate plane to the subject at an arrangement location to arrange the subject thereon may have a cross-section different from that of a plane adjacent to the proximate plane.

Any embedding container described above may have a first cross-section that is a cut surface of the embedding container including the proximate plane. Any embedding container described above may have a second cross-section that is a cut surface of the embedding container including a plane adjacent to the proximate plane and that has a different shape from the shape of the first cross-section.

Any embedding container described above may have a first cross-section that is a cut surface of the embedding container including the proximate plane. Any embedding container described above may have a third cross-section that is a cut surface of the embedding container including a plane adjacent to the proximate plane and that has a different cross-sectional area from a cross-sectional area of the first cross-section.

Any embedding container described above may have a first cross-section that is a cut surface of the embedding container including the proximate plane. Any embedding container described above may have a fourth cross-section that is a cut surface of the embedding container including a plane adjacent to the proximate plane and that has a material of the embedding container different from a material of the embedding container in the first cross-section.

The proximate plane may be parallel to an installation surface on which any embedding container described above is installed.

Any embedding container described above may include an upper portion which defines an upper space and a lower portion which defines a lower space. The proximate plane may be arranged at a boundary between the upper portion and the lower portion.

The upper portion may have an open shape which is open outwardly.

The lower portion may have an aperture which is connectable to outside of any embedding container described above.

Any embedding container described above may include a first porous member in the proximate plane. The first porous member may be the holding member.

Any embedding container described above may further comprise: a second porous member at a position opposite to the first porous member with the subject sandwiched therebetween. The second porous member may be the holding member.

A thickness of the first porous member in a direction perpendicular to an installation surface on which any embedding container described above is installed may be 100 µm or less.

Any embedding container described above may include an upper portion which defines an upper space and a lower portion which defines a lower space relative to the holding member. A cross-sectional area of the cross-section of the lower portion may be different from a cross-sectional area of a cross-section of the upper portion. A circumferential length of the lower portion may be different from a circumferential length of the upper portion. In any embedding container described above, a stepped portion may be formed at the boundary between the upper portion and the lower portion. Any first porous member described above may be arranged on the stepped portion.

Any embedding container described above may include a water-absorbing material arranged in the lower space. The water-absorbing material may be the holding member.

The water-absorbing material may have a plurality of colors. In any embedding container described above, the color of the water-absorbing material may change at the proximate plane.

An inner diameter of the embedding container may increase gradually as the lower space is closer to the upper portion along a direction perpendicular to an installation surface on which any embedding container described above is installed.

An inner diameter of the embedding container may decrease gradually as the upper space is closer to the lower portion along a direction perpendicular to an installation surface on which any embedding container described above is installed.

A height of the upper portion may be 3 mm or more and 20 mm or less. A height of the lower portion may be 0.2 mm or more and 3 mm or less. An inner diameter of any embedding container described above may be 0.5 mm or more and 6 mm or less.

In any embedding container described above, a plurality of upper spaces, each being identical to the upper space, may be integrally arranged in a planar manner.

In any embedding container described above, a honeycomb structure may be formed by the upper spaces integrally arranged in the planar manner.

Any embedding container described above may be formed of at least one or more of plastic, paper, wood, or fiber.

The subject may include at least one of a cell, an aggregate of cells, a biological tissue, an organism, a fungus, or an alga.

Any embedding container described above may further comprise: an outer periphery portion which surrounds an outer periphery of the embedding container. The outer periphery portion may include a plane that is not perpendicular to a direction in which any embedding container described above is cut.

The outer periphery portion may include, between itself and any embedding container described above, an intermediate portion which extends in a radial direction of the embedding container. The intermediate portion may be a region which is 3 mm or more relative to a direction in which any embedding container described above is cut.

There is provided an embedding method using any embedding container described above. The embedding method may comprise: a step for arranging the subject in any embedding container described above; and a step for embedding the subject and any embedding container described above as a whole.

Any embedding method described above may comprise: after the step for arranging and before the step for embedding, a step for preprocessing the subject by introducing a processing solution into any embedding container described above while the subject remains arranged in the embedding container.

Any embedding method described above may comprise: after the step for preprocessing and before the step for embedding, a step for performing in-container embedding of the subject in any embedding container described above by introducing an embedding agent into the embedding container while the subject remains arranged in the embedding container.

There is provided an embedding apparatus comprising any embedding container described above. The embedding apparatus may comprise: a moving unit which moves any embedding container described above; and an introduction unit which introduces a processing solution and/or an embedding agent into the embedding container.

### BRIEF DESCRIPTION OF THE DRAWINGS

Fig. 1 shows an example of an embedding container according to the present embodiment.
Fig. 2 shows an example of an embedding container according to the present embodiment.
Fig. 3 shows an example of an embedding container according to the present embodiment.
Fig. 4 shows an example of an embedding container according to the present embodiment.
Fig. 5 shows an example of an embedding container according to the present embodiment.
Fig. 6 shows an example of an embedding container according to the present embodiment.
Fig. 7 shows an example of an embedding container according to the present embodiment.
Fig. 8 shows an example of an embedding container according to the present embodiment.
Fig. 9 shows an example of an embedding container according to the present embodiment.
Fig. 10 shows an example of an embedding container according to the present embodiment.
Fig. 11 shows an example of an embedding container according to the present embodiment.
Fig. 12 shows an example of an integrated structure of the embedding containers according to the present embodiment.
Fig. 13 shows an example of an integrated structure of the embedding containers according to the present embodiment.
Fig. 14 shows an example of an embedding container according to the present embodiment.
Fig. 15 shows an example configuration of an embedding apparatus according to the present embodiment.
Fig. 16 shows an example flowchart of a method for preparing a specimen from a subject according to the present embodiment.
Fig. 17 shows an example flowchart of a method for arranging the subject in an embedding container according to the present embodiment.
Fig. 18 illustrates the method of S100 for arranging the subject in the embedding container according to the present embodiment.
Fig. 19 illustrates the method of S100 for arranging the subject in the embedding container according to the present embodiment.
Fig. 20 shows an example flowchart of a method for preprocessing a subject according to the present embodiment.
Fig. 21 illustrates the method for preprocessing the subject according to the present embodiment.
Fig. 22 shows an example of an embedding container filled with an embedding agent according to the present embodiment.
Fig. 23 shows an example of an embedding container filled with an embedding agent according to the present embodiment.
Fig. 24 illustrates a method for slicing a subject according to the present embodiment.
Fig. 25 illustrates an example of specimen preparation from an integrated structure of the embedding containers according to the present embodiment.
Fig. 26 illustrates S170 and S190 in the example of specimen preparation from the integrated structure of the embedding containers.
Fig. 27 illustrates an example of specimen preparation from the integrated structure of the embedding containers according to the present embodiment.
Fig. 28 shows an example cross-sectional view of an embedding container included in the integrated structure.
Fig. 29 illustrates S100 to S270 in the example of specimen preparation from the integrated structure of the embedding containers.
Fig. 30 illustrates S190 in the example of specimen preparation from the integrated structure of the embedding containers.
Fig. 31 shows an example of a hardware configuration of a computer.

### DESCRIPTION OF EXEMPLARY EMBODIMENTS

Hereinafter, the present invention will be described through embodiments of the invention, but the following embodiments do not limit the invention according to claims. In addition, not all combination of the features described in the embodiments are necessary for the solution of the invention. Note that in the drawings, the same or similar parts are assigned with same reference signs, and duplicated descriptions may be omitted.

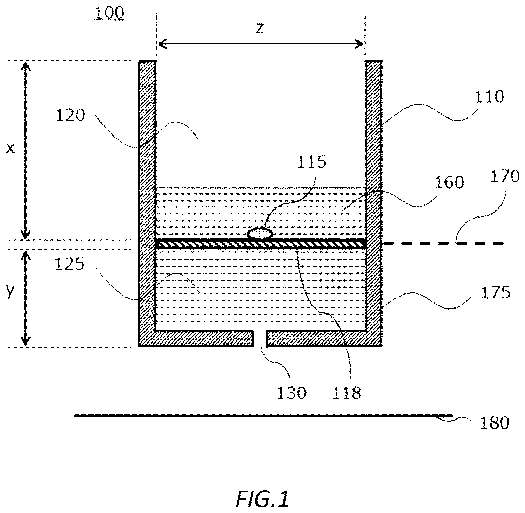

Fig. 1 shows an example configuration of an embedding container 100 according to the present embodiment. The embedding container 100 can accommodate and arrange therein a subject 115. By embedding the embedding container 100 with the subject 115 accommodated therein and cutting the embedding container 100 along with the subject 115, a specimen of the subject 115 can be created. The details will be described later.

The embedding container 100 may be installed on an installation surface 180. The installation surface 180 is a horizontal plane, for example. Here, "horizontal" is not limited to a horizontal plane only but it may also be inclined relative to the horizontal plane by approximately ± 10 degrees or less, approximately ± 9 degrees or less, approximately ± 8 degrees or less, approximately ± 7 degrees or less, approximately ± 6 degrees or less, approximately ± 5 degrees or less, approximately ± 4 degrees or less, approximately ± 3 degrees or less, approximately ± 2 degrees or less, or approximately ± 1 degree or less. Fig. 1 is a cross-sectional view of the embedding container 100 that is cut along a cross-section perpendicular to the installation surface 180.

When the embedding container 100 is cut along an arbitrary plane, the cross-section of a wall 175, which is a wall of the embedding container 100, may appear on the cut surface. The wall 175 may be a lateral side or a bottom side of the embedding container 100.

The embedding container 100 may include all or at least part of a container body 110 and a holding member. The holding member may be a porous member. As an example, the porous member is a filter 118. As an example, the porous member is a water-absorbing material. The details of the holding member will be described later.

The container body 110 provides for a main structure of the embedding container 100. The container body 110 may have a shape of hollow cylinder (column), a hollow polygonal prism, a hollow truncated circular cone, or a hollow truncated polygonal pyramid, but not limited thereto.

A material of the container body 110 may be formed of at least one or more of plastic, paper, wood, or fiber. By the material of the container body 110 being at least one of plastic, paper, wood, or fiber, the embedding container 100 becomes easier to cut when a specimen including the subject 115 is created.

The plastic may be a thermoplastic resin or a thermosetting resin. For example, the plastic includes one or more of silicone rubber, polyacetal (POM), polycarbonate (PC), polypropylene (PP), polyethylene terephthalate (PET), polyurethane (PU), polymethyl methacrylate (PMMA), polystyrene (PS), and polyvinyl chloride (PVC), but not limited thereto.

When the material of the container body 110 is plastic, the container body 110 may be manufactured by any method such as compression molding, injection molding, or extrusion molding. When the material of the container body 110 is plastic, the container body 110 has good workability. When the material of the container body 110 is wood, the container body 110 may be manufactured by any method such as thermoforming. When the material of the container body 110 is paper or fiber, the container body 110 may be manufactured by any method such as pasting.

The subject 115 is a subject of the specimen to be created. The subject 115 is a biological entity. The biological entity may be an organic creature. For example, the biological entity is a cell. As an example, the cell is an animal cell or a plant cell. As an example, the cell is a live cell or a dead cell.

The biological entity may be a biological entity other than a cell. As an example, the biological entity includes at least one of a single cell, a spheroid (cell aggregate), a biological tissue, an organoid (cell aggregate), an organism (such as microorganisms), a fungus, or an alga. The biological entity may include an organelle in a cell. The size of the biological entity may be 0.5 mm or less, 1 mm or less, 1.5 mm or less, 2 mm or less, 2.5 mm or less, or 3 mm or less in its major diameter, but is not limited thereto. The size of the biological entity may be 100 µm or less in its major diameter, which is difficult to observe visually, or 500 µm or less, which is the size of a minute structure.

The interior of the embedding container 100 and the subject 115 are immersed with a liquid 160. The liquid 160 may be a culture medium to culture the subject 115 and/or a liquid to create the specimen. For example, the liquid 160 is water, a buffer solution, a culture medium, an organic solvent, or the like. The organic solvent may be a processing solution and an embedding solution, which will be described later, or may be a fixative solution, a dehydrating solution, a degreasing solution, an embedding agent, and/or the like to create a specimen. As an example, the organic solvent is formalin (formaldehyde, paraformaldehyde), glutaraldehyde, Bouin's solution, Carnoy's solution, methanol, ethanol, xylene, xylene substitute, paraffin, and/or celloidin.

The holding member holds the subject 115 thereon. The holding member may be embedded along with the subject 115 while the subject 115 remains held thereon. As an example, the holding member is embedded in contact with the subject 115. For example, the holding member may be a porous member. The porous member may be a member provided with holes on the surface and/or inside. For example, the porous member is a filter 118. The filter 118 allows the liquid 160 to pass and holds the subject 115. That is, the subject 115 is arranged on the filter 118. The filter 118 may be fixed to the container body 110. The filter 118 may be fixed to the container body 110 by laser welding or by bonding with a double-sided tape or an adhesive. By the filter 118 being welded to the container body 110 by a laser, the container body 110 can withstand the pressure caused by introduction and discharge of the liquid 160 without being encroached by the liquid 160. In the case of bonding with a double-sided tape or an adhesive, the double-sided tape or the adhesive is preferably one that is not eluted by the heated liquid 160 and that does not drop and/or not become degraded by the introduction and discharge of the liquid 160. The filter 118 may be detachable from the container body 110 as required in a preprocessing stage of the subject 115 (for example, in step S200 described later).

A gap may be provided between the filter 118 and a wall 175 of the container body 110. The liquid 160 may pass through the gap. A major diameter or a minor diameter of the gap in the filter 118 through which the liquid 160 can pass may be larger than a major diameter or a minor diameter of the subject 115. By the major diameter or the minor diameter of the gap through which the liquid 160 can pass being larger than the major diameter or the minor diameter of the subject 115, the subject 115 does not prevent the passing of the liquid 160.

Instead of/in addition to providing the gap, the filter 118 may be provided with one or more holes (meshes) so that the liquid 160 is communicated between an upper portion 120 and a lower portion 125. The size of the hole may be arbitrarily selected so that it does not allow the subject 115 to pass therethrough. The size of the hole may be approximately 0.2 µm or more and approximately 10 µm or less in diameter, but is not limited thereto.

Any material can be used for the material of the filter 118 without a particular limitation, as long as it is not decomposed by the liquid 160 and/or it can withstand the pressure caused by introduction and discharge of the liquid 160. The filter 118 may be a mesh filter. For example, the material of the filter 118 is at least one of plastic, paper, wood, or fiber. As an example, the material of the filter 118 is a plastic such as polytetrafluoroethylene (PFTE), polyimide (PI), or polyethersulfone (PES). The filter 118 may be nonwoven fabric. For example, the material of the filter 118 is fiber.

Coating may be applied to the surface of the filter 118 which contacts the subject 115 so that the affinity for the subject 115 is obtained. As a material for the coating, poly-L-lysine, poly-D-lysine, extracellular matrix (such as laminin, fibronectin, or collagen), proteoglycan or the like may be used, but not limited thereto.

A thickness of the filter 118 in a direction perpendicular to the installation surface 180 on which the embedding container 100 is installed may be 20 µm or more and 200 µm or less. The thickness of the filter 118 in the direction perpendicular to the installation surface 180 on which the embedding container 100 is installed may be 100 µm or less. When the thickness of the filter 118 is 100 µm or more and 200 µm or less, the embedding container for the filter 118 is easily manufactured or handled. When the thickness of the filter 118 is 20 µm or more and less than 100 µm, it is advantageous to operate the solution for embedding because less pressure is required for causing the liquid 160 to communicate.

The embedding container 100 may be divided into the upper portion 120 and the lower portion 125. For example, the embedding container 100 is divided into the upper portion 120 and the lower portion 125 at a position of the filter 118. In this manner, the filter 118 is provided on the boundary between the upper portion 120 and the lower portion 125. The filter 118 may be an arrangement location to arrange the subject 115 thereon.

The upper portion 120 defines an upper space in the embedding container 100. The upper space may be defined relative to the holding member. In this case, a space above the holding member is the upper space. A part or all of the upper space may be filled with the liquid 160. The upper portion may have an open shape which is open outwardly. For example, the upper space is not provided with a lid. For example, a lid is provided to the embedding container 100 of the open shape to close the upper space so as to prevent the ingress of dirt or the like into the upper space. A nozzle or the like of a biological-entity operation unit described later may be inserted into the upper space to arrange the subject 115, and details will be described later.

The lower portion 125 defines a lower space of the embedding container 100. The lower space may be defined relative to the holding member. In this case, a space below the holding member, that is, a space opposite to the upper space relative to the holding member is the lower space. A part or all of the lower space may be filled with the liquid 160. The lower space may have a shape that is closed from the outside.

The lower portion 125 of the container body 110 may be provided with an aperture 130 that is connectable to the outside of the embedding container 100. The liquid 160 may be introduced from the outside of the embedding container 100 through the aperture 130 to the lower portion 125 and the upper portion 120. When a part of the upper space and a part of the lower space are filled with the liquid 160 in order to embed or preprocess the subject 115, the subject 115 can be embedded or preprocessed with a small amount of liquid 160. The liquid 160 may be discharged from the lower portion 125 through the aperture 130 to the outside of the embedding container 100. The upper space may be filled with the liquid 160 by the lower space being filled with the liquid 160 and the liquid moving to the upper space through the filter 118. The aperture 130 may be formed on a bottom side of the lower portion 125 or may be formed on a lateral side of the lower portion 125. The diameter of the aperture 130 may be arbitrarily determined depending on the size of the subject 115. When the diameter of the aperture 130 is larger than the diameter of the subject 115, the aperture 130 is not blocked by the subject 115, and thus a clogging problem of the aperture 130 by the subject 115 or the like can be eliminated. The aperture 130 may be blocked by a lid, a plug, or the like, except when the liquid is introduced to the container body 110 and/or the liquid 160 is discharged from the container body 110.

Here, the upper portion 120 and the lower portion 125 may be defined in such a manner that, in the height direction of the embedding container 100 (a direction perpendicular to the installation surface 180), one of them situated relatively higher is the upper portion 120 whereas another of them situated relatively lower is the lower portion 125. They may be defined in such a manner that, when the embedding container 100 is installed on the installation surface 180, one of them that is relatively farther from the installation surface 180 is the upper portion 120 whereas another of them that is relatively closer to the installation surface 180 is the lower portion 125.

The liquid 160 may be directly introduced to the upper space without passing through the aperture 130. The upper portion 120 and the lower portion 125 may be integrally fixed to each other or may be detachable as required.

A proximate plane 170 is a plane that is present in proximity to the arrangement location to arrange the subject 115 thereon. The proximate plane 170 may be arranged on the boundary between the upper portion 120 and the lower portion 125. The proximate plane 170 may include a plane on which the subject 115 is arranged. The proximate plane 170 may include a plane on which the subject 115 is arranged and a plane that is proximate to the plane on which the subject 115 is arranged.

The proximate plane 170 may include the plane on which the subject 115 is arranged and a plane that is present in a space of a predetermined height range of both directions, in the height direction (the direction perpendicular to the installation surface 180), relative to the plane on which the subject 115 is arranged. For example, the predetermined height is approximately ten times, approximately nine times, approximately eight times, approximately seven times, approximately six times, approximately five times, approximately four times, approximately three times, approximately twice, or approximately one time the major diameter or the minor diameter of the subject 115.

The proximate plane 170 may be parallel to the installation surface 180 on which the embedding container 100 is installed. For example, the proximate plane 170 is a horizontal plane. The proximate plane 170 is not limited to the horizontal plane only but it may also be inclined relative to the horizontal plane by approximately ± 10 degrees or less, approximately ± 9 degrees or less, approximately ± 8 degrees or less, approximately ± 7 degrees or less, approximately ± 6 degrees or less, approximately ± 5 degrees or less, approximately ± 4 degrees or less, approximately ± 3 degrees or less, approximately ± 2 degrees or less, or approximately ± 1 degree or less.

The proximate plane 170 may be perpendicular to the installation surface 180 on which the subject 115 is arranged. In this case, the proximate plane 170 may include a plane that is present in a column having a circle on the lateral side with a radius length, relative to a location at which the subject 115 is arranged, of approximately ten times, approximately nine times, approximately eight times, approximately seven times, approximately six times, approximately five times, approximately four times, approximately three times, approximately twice, or approximately one time the major diameter or the minor diameter of the subject 115 on the installation surface 180.

The proximate plane 170 may include a porous member. The proximate plane 170 may be a plane included in a porous member (for example, the filter 118) on which the subject 115 is arranged. In this case, the proximate plane 170 may be a plane having a shape equivalent to the shape of the porous member.

A plane that is adjacent to the proximate plane 170 may be defined as a plane adjacent to the proximate plane 170. The proximate plane 170 and the plane adjacent to the proximate plane 170 may be in contact with each other at a point or may be in contact with each other along a straight line, a curved line, a plane, a curved plane, or the like. As an example, the plane adjacent to the proximate plane 170 is a plane that is parallel to the proximate plane 170 and that is included in a range of height that is included in either one of the height x of the upper portion 120 or the height y of the lower portion.

When the liquid 160 is introduced and/or discharged to/from the embedding container 100, the proximate plane 170 may be inclined relative to the installation surface 180 and the horizontal plane by approximately ± 10 degrees or less, approximately ± 9 degrees or less, approximately ± 8 degrees or less, approximately ± 7 degrees or less, approximately ± 6 degrees or less, approximately ± 5 degrees or less, approximately ± 4 degrees or less, approximately ± 3 degrees or less, approximately ± 2 degrees or less, or approximately ± 1 degree or less.

The proximate plane 170 to the subject 115 and the plane adjacent to the proximate plane 170 may have a different cross-section from each other. For example, the proximate plane 170 is different from the plane adjacent to the proximate plane 170 in one or more of the shape of the cross-section, the size of the cross-sectional area, and the material of the cross-section. The cross-section may or may not include the subject 115. In the embedding container 100 of the present embodiment, by using the difference in one or more of the shape of the cross-section, the size of the cross-sectional area, and the material of the cross-section as a guide, a specimen of the subject 115 can be created in a simple manner without losing sight of the subject 115. The details will be described later.

Specifically, the embedding container 100 may include a first cross-section that is a cut surface of the embedding container 100 including the proximate plane 170 and a second cross-section that is a cut surface of the embedding container 100 including the plane adjacent to the proximate plane 170 and that has a different shape from the shape of the first cross-section. The shape of the first cross-section and the second cross-section may be a shape such as a circle, an ellipse, or a polygon (which may be a triangle, a quadrilateral, a pentagon, or a hexagon or the like), but not limited thereto. The details will be described later.

The embedding container 100 may include the first cross-section that is a cut surface of the embedding container 100 including the proximate plane 170 and a third cross-section that is a cut surface of the embedding container 100 including the plane adjacent to the proximate plane 170 and that has a different cross-sectional area from that of the first cross-section. The cross-sectional areas of the first cross-section and the third cross-section may be an area of the cross-section surrounded by an outer diameter of the embedding container 100 or may be an area of the cross-section surrounded by an inner diameter of the embedding container 100. By the difference in the cross-sectional area between the first cross-section and the third cross-section, a stepped portion may be formed in the embedding container 100. The details will be described later.

The embedding container 100 may include the first cross-section that is a cut surface of the embedding container 100 including the proximate plane 170 and a fourth cross-section that is a cut surface of the embedding container 100 including the plane adjacent to the proximate plane 170 and that has a material of the embedding container 100 different from the material of the embedding container 100 in the first cross-section. The material of the embedding container 100 in the first cross-section and the fourth cross-section may be at least one of plastic, paper, wood, or fiber.

The height x of the upper portion 120 of the embedding container 100 (the length in the direction perpendicular to the bottom side) may be 3 mm or more and 5 mm or less. By the height x of the upper portion 120 being in the above-described range, the embedding container 100 excels in the time required for temperature regulation of the liquid 160 and energy consumption. The height x of the upper portion 120 of the embedding container 100 (the length in the direction perpendicular to the bottom side) may be 5 mm or more and 20 mm or less. By the height x of the upper portion 120 being in the above-described range, an operation to attach the embedding container 100 to a known microtome becomes easy.

The height y of the lower portion 125 of the embedding container 100 (the length in the direction perpendicular to the bottom side) may be 0.2 mm or more and 3 mm or less. By the height y of the lower portion 125 being in the above-described range, the embedding container 100 excels in the time required for temperature regulation of the liquid 160 and energy consumption, as well as only the fewer number of cuts are required. In addition, it is advantageous in an embedding method described later to accommodate the embedding container 100 in an embedding dish.

The inner diameter z of the upper portion 120 and/or the lower portion 125 of the embedding container 100 in the direction horizontal to the bottom side may be 0.5 mm or more and 6 mm or less. By the inner diameter z of the embedding container 100 being in a range of 0.5 mm or more and 6 mm or less, the embedding container 100 can be appropriately accommodated in the embedding dish and excel in operability.

After the embedding container 100, in which the subject 115 is arranged on the porous member (for example, the filter 118), is embedded in a paraffin or the like, the embedding container 100 is cut as a whole, and thus the specimen of the subject 115 can be obtained. The embedding container 100 may be cut horizontally relative to the bottom side and the cutting may proceed from the bottom side of the lower portion 125 of the embedding container 100 to the upper portion 120. Instead of cutting it horizontally relative to the bottom side, the embedding container 100 may be cut in parallel to a plane that is inclined relative to the horizontal plane by approximately ± 10 degrees or less, approximately ± 9 degrees or less, approximately ± 8 degrees or less, approximately ± 7 degrees or less, approximately ± 6 degrees or less, approximately ± 5 degrees or less, approximately ± 4 degrees or less, approximately ± 3 degrees or less, approximately ± 2 degrees or less, or approximately ± 1 degree or less.

The embedding container 100 may be cut coarsely until the porous member appears. In this case, a cross-section on which the porous member appears may be the cross-section of the proximate plane 170 and a cross-section obtained before the porous member appears may be the cross-section of the plane adjacent to the proximate plane 170. The porous member appears on the cross-section of the proximate plane 170, and thus there is a change in one or more of the shape of the cross-section, the cross-sectional area, and the material relative to the cross-section of the plane adjacent to the proximate plane 170. Because such a change reveals the nearby presence of the subject 115, the proximate plane 170 may be cut carefully.

In this manner, by cutting the embedding container 100 coarsely or finely using the presence of the porous member as a guide, a specimen of the subject 115 can be created in a simple manner without losing sight of the subject 115. The details will be described later.

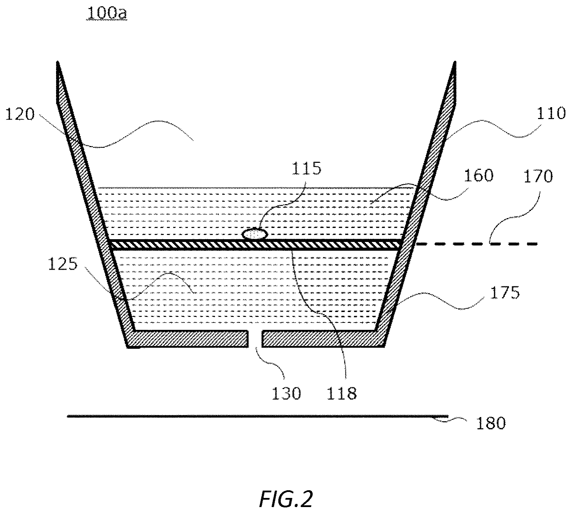

Fig. 2 shows another example of the configuration of the embedding container 100 according to the present embodiment. In the embedding container 100 shown in Fig. 1, the bottom side and the lateral side of the embedding container 100 form a substantially right angle, whereas in the embedding container 100a shown in Fig. 2, the lateral side of the embedding container 100 is inclined from the right angle relative to the bottom side. The embedding container 100a shown in Fig. 2 has an inner diameter that increases toward the upper portion 120 along the direction perpendicular to the installation surface 180 (the height direction), although the embedding container 100a is not limited to this structure and may have an inner diameter that decreases toward the upper portion 120 along the direction perpendicular to the installation surface 180 (the height direction). The embedding container 100a shown in Fig. 2 has a size of an inner diameter that increases continuously toward the upper portion 120 along the direction perpendicular to the installation surface 180 (the height direction), although the embedding container 100a is not limited to this structure and may have a size of an inner diameter that increases/decreases intermittently.

When the embedding container 100a shown in Fig. 2 is cut horizontally relative to the bottom side and the cutting proceeds from the bottom side of the lower portion 125 of the embedding container 100a to the upper portion 120, the cross-sectional area of the cut surface gradually increases, and thus the nearby presence of the subject 115 is revealed when the cross-sectional area reaches a predetermined value of the cross-sectional area (for example, a value of the cross-sectional area near the boundary between the upper portion 120 and the lower portion 125). Accordingly, the embedding container 100 may be cut coarsely until the cross-sectional area reaches the predetermined value of the cross-sectional area, and after it reaches the predetermined value of the cross-sectional area, the proximate plane 170 may be cut carefully. In this manner, because cutting of the embedding container 100a can be performed coarsely or finely using the predetermined value of the cross-sectional area as a guide, a specimen of the subject 115 can be created in a simple manner without losing sight of the subject 115.

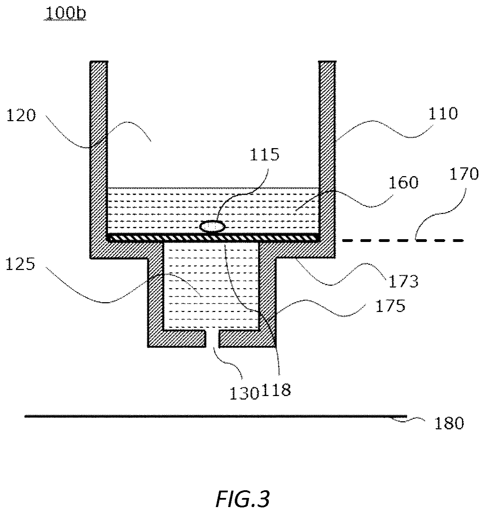

Fig. 3 shows another example of the configuration of the embedding container 100 according to the present embodiment. In the embedding container 100 shown in Fig. 1, the cross-sectional areas of the cross-section of the upper portion 120 and the cross-section of the lower portion 125 horizontal to the bottom side of the embedding container are approximately equal to each other, whereas in the embedding container 100b shown in Fig. 3, the cross-sectional area of the cross-section of the lower portion 125 and/or a circumference (for example, a length of an outer periphery of the cross-section horizontal to the bottom side of the embedding container 100b) is different from the cross-sectional area of the cross-section of the upper portion 120 and/or a circumferential length (for example, a length of an outer periphery of the cross-section horizontal to the bottom side of the embedding container 100b). Thus, a stepped portion 173 is formed at the boundary between the upper portion 120 and the lower portion 125. The filter 118, which is a porous member, may be arranged on the stepped portion 173.

In the embedding container 100b shown in Fig. 3, the cross-sectional area of the cross-section of the lower portion 125 horizontal to the bottom side is smaller than the cross-sectional area of the cross-section of the upper portion 120 horizontal to the bottom side, although the embedding container 100b is not limited to this structure and the cross-sectional area of the cross-section of the lower portion 125 horizontal to the bottom side may be larger than the cross-sectional area of the cross-section of the upper portion 120 horizontal to the bottom side. Again in the latter case, a stepped portion 173 is formed at the boundary between the upper portion 120 and the lower portion 125 and the filter 118, which is a porous member, can be arranged on the stepped portion 173.

When the embedding container 100b shown in Fig. 3 is cut horizontally relative to the bottom side and the cutting proceeds from the bottom side of the lower portion 125 of the embedding container 100b to the upper portion 120, the embedding container 100b may be coarsely cut until the stepped portion 173 appears on the cross-section. After the appearance of the stepped portion 173 on the cut surface, it is obvious that the subject 115 is present nearby and thus the embedding container 100b may be cut carefully. The cut surface may be determined to have reached the stepped portion 173 when the cross-sectional area occupied by the wall 175 appearing on the cut surface increased or when the shape of the wall 175 appearing on the cut surface changed. In this manner, by cutting the embedding container 100b coarsely or finely using the presence of the stepped portion 173 as a guide, a specimen of the subject 115 can be created in a simple manner without losing sight of the subject 115.

In the embedding container 100b shown in Fig. 3, the inner diameter of the embedding container 100b in the lower space in the direction horizontal to the bottom side is substantially constant, although the inner diameter of the embedding container 100b may increase or decrease gradually as the lower space is closer to the upper portion 120 along the direction (the height direction) perpendicular to the installation surface 180 on which the embedding container 100b is installed. In the latter case, when the embedding container 100b is cut horizontally relative to the bottom side and the cutting proceeds from the bottom side of the lower portion 125 of the embedding container 100b to the upper portion 120, the cross-sectional area occupied by the wall 175 in the cut surface increases or decreases gradually, and thus the nearby presence of the subject 115 is revealed when a predetermined value of the cross-sectional area occupied by the wall 175 (for example, a value of the cross-sectional area occupied by the wall 175 near the boundary between the upper portion 120 and the lower portion 125) is reached. Accordingly, the embedding container 100b can be cut coarsely or finely using the predetermined value of the cross-sectional area occupied by the wall 175 as a guide and a specimen of the subject 115 can be created in a simple manner without losing sight of the subject 115.

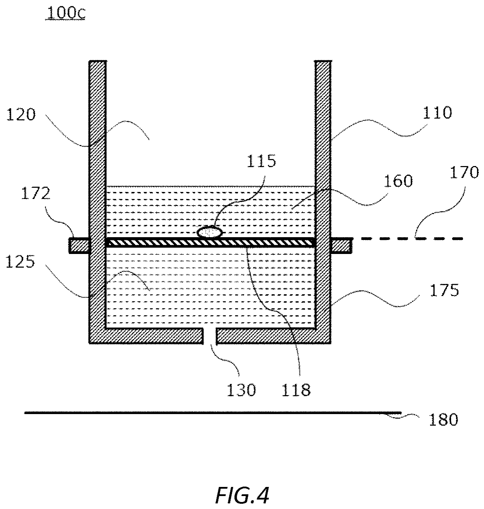

Fig. 4 shows another example of the configuration of the embedding container 100 according to the present embodiment. The embedding container 100 shown in Fig. 1 has a substantially flat lateral side, whereas the embedding container 100c shown in Fig. 4 has one or more protrusions 172 formed at the proximate plane 170 protruding to the outside of the embedding container 100.

When the embedding container 100c shown in Fig. 4 is cut horizontally relative to the bottom side and the cutting proceeds from the bottom side of the lower portion 125 of the embedding container 100c to the upper portion 120, the embedding container 100c may be coarsely cut until the protrusion 172 appears on the cross-section. After the appearance of the protrusion 172 on the cut surface, it is obvious that the subject 115 is present nearby and thus the embedding container 100c may be cut carefully. In this manner, by cutting the embedding container 100c coarsely or finely using the presence of the protrusion 172 as a guide, a specimen of the subject 115 can be created in a simple manner without losing sight of the subject 115.

Although the protrusion 172 is formed on the embedding container 100c shown in Fig. 4, one or more recesses may be formed instead of the protrusion 172. Again in this case, by cutting the embedding container 100c coarsely or finely using the presence of the recess as a guide, a specimen of the subject 115 can be created in a simple manner without losing sight of the subject 115.

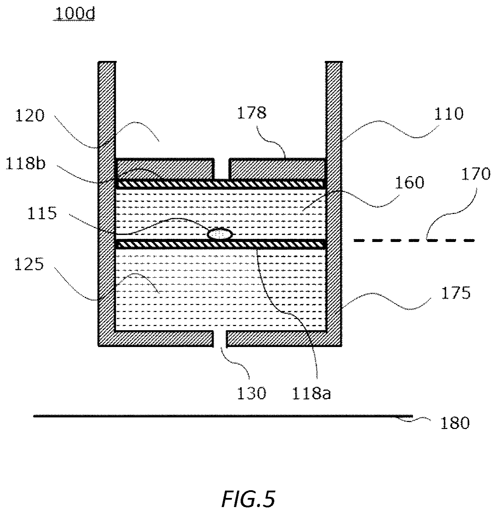

Fig. 5 shows another example of the configuration of the embedding container 100 according to the present embodiment. The embedding container 100 may further include a porous member at a position opposite to the porous member, with the subject 115 sandwiched therebetween. The embedding container 100 shown in Fig. 1 includes the filter 118, which is a porous member, consisting of one filter provided at the boundary between the upper portion 120 and the lower portion 125, whereas the embedding container 100d shown in Fig. 5 further includes a filter 118b on the opposite side of the boundary relative to the subject 115, in addition to the filter 118a provided at the boundary.

The shapes of the filter 118a and the filter 118b may be the same. The filter 118b may be provided alone in the upper portion of the embedding container 100d or may be provided integrally with the lid 178 of the embedding container 100d. Here, the filter 118b may be provided on a side of the lid 178 which faces the subject 115.

The embedding container 100d shown in Fig. 5 can reduce the possibility of losing the subject 115 by sandwiching the subject 115 between two filters of the filter 118a and the filter 118b. The embedding container 100d shown in Fig. 5 is economical because it requires a reduced amount of consumption of liquid 160 due to the two filters provided in proximity to each other.

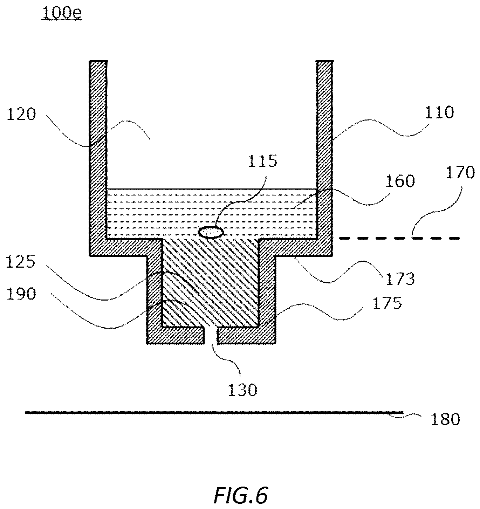

Fig. 6 shows another example of the configuration of the embedding container 100 according to the present embodiment. The embedding container 100b shown in Fig. 3 has a void in the lower space of the lower portion 125, whereas the embedding container 100e shown in Fig. 6 has a water-absorbing material 190 as a porous member arranged in the lower space of the lower portion 125. The water-absorbing material 190 absorbs the liquid 160. The water-absorbing material 190 may occupy all of or at least a part of the lower space.

Any material can be used as the water-absorbing material 190 without a particular limitation as long as the material is capable of absorbing the liquid 160 such as water. For example, the water-absorbing material 190 is a sponge, woven fabric, nonwoven fabric, foam, porous polymer, or water-absorbing polymer compound. As an example, the water-absorbing material 190 is a sponge made of polyester, nylon, cotton, or the like. The water-absorbing material 190 may be a plurality of layered structures having different materials or different material properties from each other. For example, the water-absorbing material 190 is a structure consisting of two layers of polymers having different material properties from each other.

In the embedding container 100e, the subject 115 may be directly arranged on the water-absorbing material 190. In this case, the filter 118 may not be provided inside the embedding container 100e. When the filter 118 is provided on the water-absorbing material 190 inside the embedding container 100e, the subject 115 may be arranged on the filter 118.

In the embedding container 100e shown in Fig. 6, the water-absorbing material 190 can absorb the liquid 160 that has become unnecessary in the embedding container 100e and thus a liquid discharging treatment can be omitted, enabling an environmental burden to be reduced. In order to sufficiently absorb the liquid 160 that has become unnecessary, the cross-sectional area of the lower portion 125 of the embedding container 100e may be larger than the cross-sectional area of the cross-section of the upper portion 120. Here, the lower space of the lower portion 125 can be made larger so that a larger water-absorbing material 190 can be accommodated in the lower space, and thus a good water-absorbing property is obtained to absorb the liquid 160.

In the embedding container 100e shown in Fig. 6, a dent may be provided at an arrangement location on which the subject 115 is arranged in the water-absorbing material 190, by embossing or the like. By providing the dent in the water-absorbing material 190, it can be ensured that the subject 115 remains arranged in the dent in the water-absorbing material 190 even when the liquid 160 is introduced and discharged.

The water-absorbing material 190 may be in a solid color. The water-absorbing material 190 may have a plurality of colors. In the water-absorbing material 190, the color of the water-absorbing material 190 may change at the proximate plane 170. Any color may be used. Good visibility may be obtained by a change in color such as changes from a light color to a dark color, from a dark color to a light color, from a warm color to a cold color, or from a cold color to a warm color.

The change in color of the water-absorbing material 190 at the proximate plane 170 reveals the nearby presence of the subject 115. Accordingly, when the cutting of the embedding container 100e proceeds from the bottom side of the lower portion 125 to the upper portion 120, the embedding container 100e can be cut coarsely or finely using the change in color of the water-absorbing material 190 as a guide and a specimen of the subject 115 can be created in a simple manner without losing sight of the subject 115.

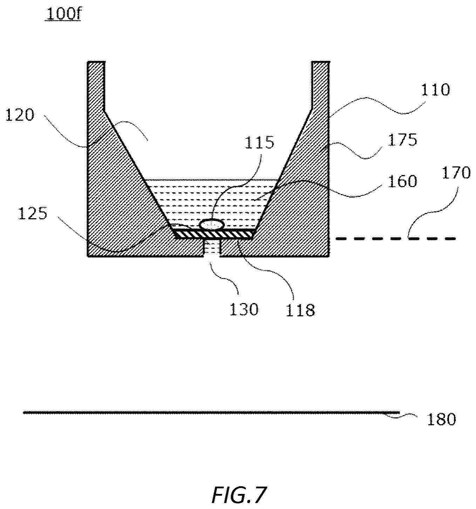

Fig. 7 shows another example of the configuration of the embedding container 100 according to the present embodiment. In the embedding container 100 shown in Fig. 1, the upper portion 120 and the lower portion 125 of the embedding container 100 have a substantially constant inner diameter, whereas in the embedding container 100f shown in Fig. 7, the inner diameter of the embedding container 100f gradually decreases as the upper space is closer to the lower portion 125 along the direction (the height direction) perpendicular to the installation surface 180 on which the embedding container 100f is installed.

In the embedding container 100f shown in Fig. 7, the inner diameter of the embedding container 100f gradually decreases as the upper space is closer to the lower portion 125 along the direction (the height direction) perpendicular to the installation surface 180 on which the embedding container 100f is installed, although the embedding container 100f is not limited to this structure, and the inner diameter of the embedding container 100f may gradually increase as the upper space is closer to the lower portion 125 along the direction perpendicular to the installation surface 180.

In the embedding container 100f shown in Fig. 7, the arrangement location (for example, the filter 118) on which the subject 115 is arranged can be smaller and the possibility of losing sight of the subject 115 is reduced because the inner diameter of the embedding container 100f gradually decreases as the upper space is closer to the lower portion 125 along the direction perpendicular to the installation surface 180. In addition, even if the subject 115 floats up from the filter 118 during introduction and discharge of the liquid 160, the subject 115 slides down onto the filter 118 due to the slope of the wall 175 and the subject 115 can be gathered on the filter 118.

The embedding container 100f shown in Fig. 7 can reduce the number of cuts because it has a small lower space and a distance to the subject 115 is short when the cutting of the embedding container 100f proceeds from the bottom side of the lower portion 125 to the upper portion 120.

The embedding container 100f shown in Fig. 7 has a cross-section of truncated circular cone shape (mortar shape) when being cut along a cross-section perpendicular to the installation surface 180, although the embedding container 100f is not limited to this structure and may have a cross-section of U shape or V shape. Even in the latter case, the subject 115 slides down onto the filter 118 and can be gathered on the filter 118.

When the embedding container 100f has a configuration in which the inner diameter of the embedding container 100f gradually increases as the upper space is closer to the lower portion 125 along the direction perpendicular to the installation surface 180, an opening of the upper space can be narrowed and thus the subject 115 can be arranged closer to the central axis of the embedding container 100.

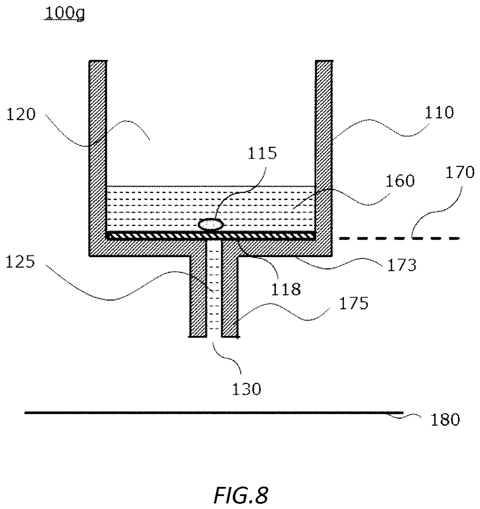

Fig. 8 shows another example of the configuration of the embedding container 100 according to the present embodiment. The embedding container 100 shown in Fig. 1 has a large lower space in the lower portion 125, whereas the embedding container 100g shown in Fig. 8 has a smaller lower space in the lower portion 125 compared to the embedding container 100 shown in Fig. 1 and the inner diameter of the lower space in the lower portion 125 is approximately the same as the diameter of the aperture 130.

The embedding container 100g shown in Fig. 8 is economical because it has a small lower space and requires a reduced amount of consumption of the liquid 160.

In the embedding container 100g shown in Fig. 8, the filter 118 is provided to cover substantially the whole plane of the boundary between the upper portion 120 and the lower portion 125, although the filter 118 may be provided to cover only a part of the boundary between the upper portion 120 and the lower portion 125. In the latter case, the required filter 118 is small and thus economical.

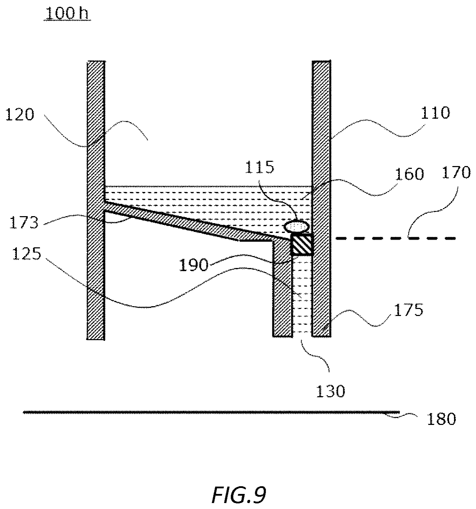

Fig. 9 shows another example of the configuration of the embedding container 100 according to the present embodiment. In the embedding container 100g shown in Fig. 8, the filter 118 is provided to cover the boundary between the upper portion 120 and the lower portion 125, whereas in the embedding container 100h shown in Fig. 9, a water-absorbing material 190 is provided to close the lower space at the boundary between the upper portion 120 and the lower portion 125. In the embedding container 100h shown in Fig. 9, the inner diameter of the lower space may be approximately the same as the inner diameter of the aperture 130. Note that, the filter 118 may be provided instead of/in addition to the water-absorbing material 190.

In the embedding container 100h shown in Fig. 9, the porous member (for example, the water-absorbing material 190) required is even smaller compared to that of the embedding container 100f in Fig. 7, and thus economical. The embedding container 100h shown in Fig. 9 is economical because it has a small lower space and requires a reduced amount of consumption of the liquid 160.

The embedding container 100g shown in Fig. 8 includes one wall 175 that constitutes the lower portion 125, whereas the embedding container 100h shown in Fig. 9 includes two walls 175 that constitute the lower portion 125.

The embedding container 100h shown in Fig. 9 has an increased stability when installed on the installation surface 180 because the embedding container 100h includes two walls 175 that constitute the lower portion 125.

In the embedding container 100g shown in Fig. 8, the lower space of the lower portion 125 is positioned near the center of the plane, which is the boundary between the upper portion 120 and the lower portion 125, and thus the water-absorbing material 190, which is the porous member, is positioned near the center of the plane, which is the boundary between the upper portion 120 and the lower portion 125, whereas in the embedding container 100h shown in Fig. 9, the lower space of the lower portion 125 is provided at a location near the wall 175 of the embedding container 100h. Accordingly, the water-absorbing material 190 is provided at the location near the wall 175 of the embedding container 100h. In the embedding container 100h shown in Fig. 9, a stepped portion 173 includes a gradient formed in the direction to the boundary between the upper portion 120 and the lower portion 125.

By the embedding container 100h shown in Fig. 9 including the gradient in the stepped portion 173, the subject 115 slides down onto the water-absorbing material 190 and the subject 115 can be gathered on the water-absorbing material 190 even if the subject 115 floats up from the water-absorbing material 190 during introduction and discharge of the liquid 160.

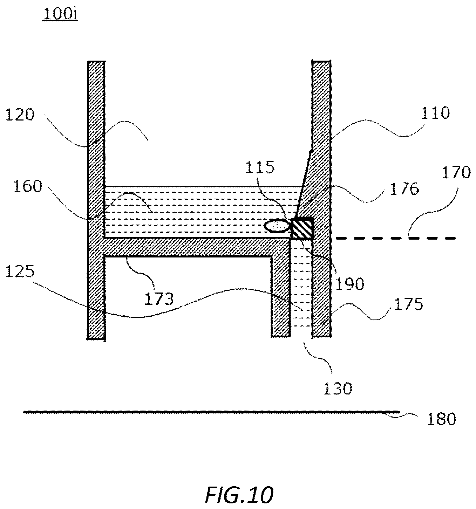

Fig. 10 shows another example of the configuration of the embedding container 100 according to the present embodiment. The embedding container 100h shown in Fig. 9 has a flat wall 175 of the upper portion 120, whereas the embedding container 100i shown in Fig. 10 has a projection 176 on the wall 175 of the upper portion 120 and is provided with the water-absorbing material 190 between the boundary between the upper portion 120 and the lower portion 125 and the projection 176. Note that, the filter 118 may be provided instead of/in addition to the water-absorbing material 190.

In the embedding container 100 shown in Fig. 1 or the embedding container 100h shown in Fig. 9, a lower side of the subject 115 is placed on the filter 118, whereas the embedding container 100i shown in Fig. 10, a lateral side of the subject 115 is placed on the water-absorbing material 190. Accordingly, in the embedding container 100i shown in Fig. 10, it is possible to create a specimen of the subject 115 that has a cross-section cut at a different angle from those obtained from the embedding container 100 of Fig. 1 or the like. The embedding container 100i shown in Fig. 10 is economical because it has a small lower space and requires a reduced amount of consumption of the liquid 160.

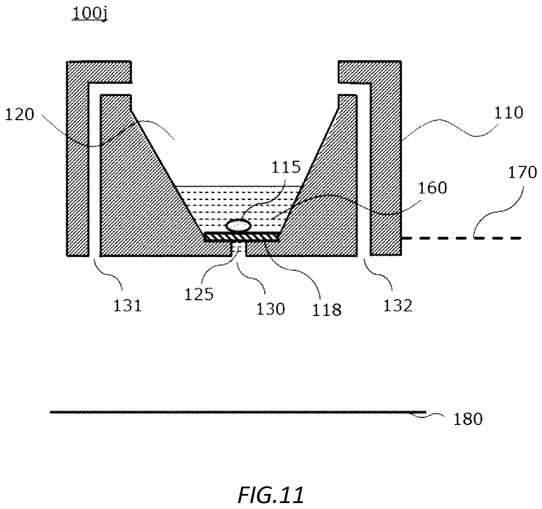

Fig. 11 shows another example of the configuration of the embedding container 100 according to the present embodiment. The embedding container 100 shown in Fig. 1 is structured to include the aperture 130 provided in the lower portion 125 so as to perform both the introduction and discharge of the liquid 160 through the aperture 130, whereas the embedding container 100j shown in Fig. 11 is provided with, in addition to the aperture 130, a passage 131 and a passage 132 that communicate with the outside of the embedding container 100 to introduce and/or discharge the liquid 160.

In the embedding container 100j shown in Fig. 11, the liquid 160 may be introduced through the passage 131 and the passage 132 and discharged through the aperture 130. Not limited to this, any of the aperture 130, passage 131, and passage 132 may be used to introduce the liquid 160 and to discharge the liquid 160.

The embedding container 100j shown in Fig. 11 can reduce the possibility of losing the subject 115 because the liquid 160 is introduced from above the subject 115 and thus the subject 115 is less likely to float up during the introduce of the liquid 160. The embedding container 100j shown in Fig. 11 can reduce the number of cuts because it has a small lower space and a distance to the subject 115 is short when the cutting of the embedding container 100j proceeds from the bottom side of the lower portion 125 to the upper portion 120.

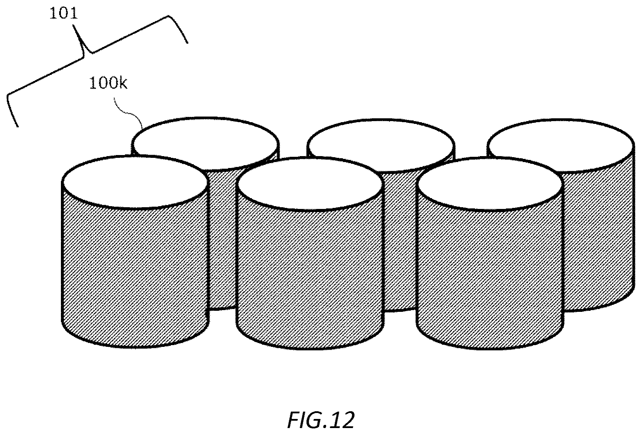

Fig. 12 shows an example of an integrated structure of the embedding containers 100 according to the present embodiment (perspective view). The embedding container 100 may be used alone as shown in Figs. 1 to 11, or may be used as an integrated structure 101 in which a plurality of embedding containers 100k are integrated as shown in Fig. 12.

In the integrated structure 101 of the embedding containers 100k shown in Fig. 12, a plurality of upper spaces are integrally arranged in a planar manner. The integrated structure 101 of the embedding containers 100k shown in Fig. 12 has a six-well integrated structure in which the embedding containers 100k are arrayed in two rows and three columns, although it is not limited to this and the integrated structure may have a structure in which two or three embedding containers 100k are arrayed in one column, a four-well integrated structure in which the embedding containers 100k are arrayed in two rows and two columns, a twelve-well integrated structure in which the embedding containers 100k are arrayed in three rows and four columns, a twenty-four-well integrated structure in which the embedding containers 100k are arrayed in four rows and six columns, a ninety-six-well integrated structure in which the embedding containers 100k are arrayed in eight rows and twelve columns, or the like.

The integrated structure 101 of the embedding containers 100k shown in Fig. 12 includes a plurality of embedding containers 100k integrated and thus can accommodate a plurality of subjects 115 inside the integrated structure 101 at a time, so that specimens of the plurality of subjects 115 can be created in a simple manner. A method to create the specimens using the integrated structure 101 of the embedding containers 100k will be described later.

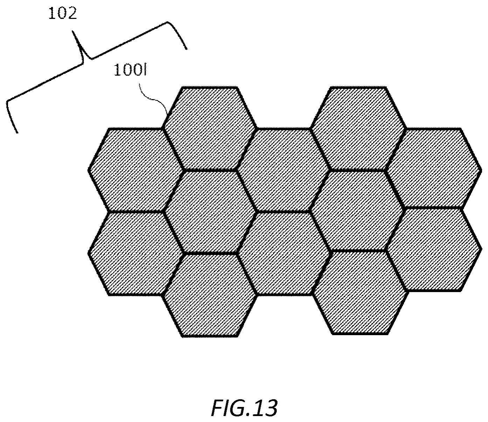

Fig. 13 shows another example of the integrated structure of the embedding containers 100 according to the present embodiment (viewed from above). The integrated structure 101 of the embedding containers 100k shown in Fig. 12 is the integrated structure of the column-shaped embedding containers 100k, whereas the integrated structure 102 of the embedding containers 100l shown in Fig. 13 includes hexagonal prism-shaped embedding containers 100l integrated in a closest packing and a honeycomb structure is formed by the upper spaces integrally arranged in a planar manner.

Due to its honeycomb structure, the integrated structure 102 of the embedding containers 100l shown in Fig. 13 has high strength and good shock absorption, can withstand the shock and vibration or the like which is caused during introduction of the liquid 160 into the embedding container 100l or discharge of the liquid 160 from the embedding container 100l or the shock and vibration caused during cutting of the integrated structure 102, and thus can prevent deformation or the like of the embedding container. Due to its honeycomb structure, the integrated structure 102 of the embedding containers 1001 shown in Fig. 13 can save the material of the embedding container 100l, can be lightweight, and have sufficient strength.

Although the integrated structure 102 of the embedding containers 100l shown in Fig. 13 has the hexagonal prism-shaped honeycomb structure, the embedding containers 100l is not limited to have only the hexagonal prism shape and the closest packing integrated structure may include the embedding containers 100l which each have a triangular prism shape (or shapes such as a triangular pyramid, a truncated triangular pyramid), or a rectangular prism shape (or shapes such as a rectangular pyramid, a truncated rectangular pyramid), or the closest packing integrated structure may partially include other polygonal prism shapes (or shapes such as a polygonal pyramid or truncated polygonal pyramid) such as a pentagonal prism shape among the hexagonal prism shapes.

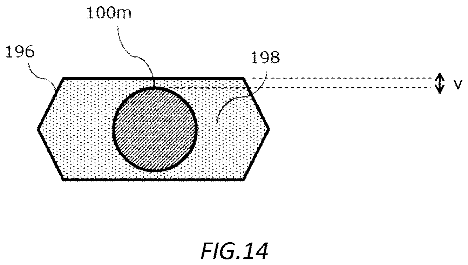

Fig. 14 shows another example of the configuration of the embedding container 100 according to the present embodiment (viewed from above). In the embedding container 100l shown in Fig. 13, the embedding container 100l itself has a hexagonal prism shape, whereas in the embedding container 100m shown in Fig. 14, an outer periphery portion 196 which surrounds the embedding container 100m has a hexagonal prism shape.

The embedding container 100m may further include the outer periphery portion 196 which surrounds the embedding container 100m. For example, the outer periphery portion 196 has a honeycomb structure which surrounds the prism-shaped embedding container 100m. The outer periphery portion 196 may be formed of the same material as the embedding container 100m. The outer periphery portion 196 may or may not be a polygonal prism (for example, a polygonal pyramid, a truncated polygonal pyramid, or the like). The embedding container 100m may be fixed to the known microtome through the outer periphery portion 196.

The outer periphery portion 196 may include a plane that is not perpendicular to the cutting direction of the subject 115. For example, the plane that is not perpendicular is an arc-shaped plane or a plane that includes a vertex of a polygonal shape. By the outer periphery portion 196 including the plane that is not perpendicular to the cutting direction of the subject 115, deformation of the embedding container 100 can be prevented.

The outer periphery portion 196 may include an intermediate portion 198 extending in a radial direction between itself and the embedding container 100m. The intermediate portion 198 is a region provided to mitigate a pressure applied from a direction perpendicular to the cutting direction during cutting of the subject 115. For example, the radial direction is a direction in which the embedding container 100m is cut. The intermediate portion 198 may be hollow or solid.

A distance from an end of the embedding container 100 to an end of the outer periphery portion 196 may be defined as a short side v. For example, the intermediate portion 198 is a region with a length of the short side v of 0.2 mm or more and 10 mm or less. The intermediate portion 198 may be a region extending 3 mm or more along the direction in which the embedding container 100m is cut. In addition, by the outer periphery portion 196 including the intermediate portion 198, the intermediate portion can further prevent the deformation of the embedding container 100.

Even when the shape of the embedding container 100m itself cannot have the honeycomb structure, the embedding container 100m shown in Fig. 14 can have the honeycomb structure by providing the outer periphery portion 196 and thus can have a high strength and good shock absorption to prevent deformation of the embedding container or the like.

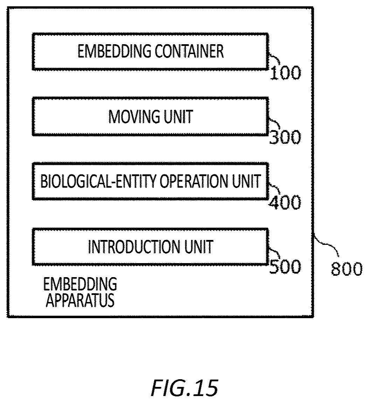

Fig. 15 shows an example configuration of the embedding apparatus 800 according to the present embodiment. The embedding apparatus 800 embeds the subject 115 to create a specimen. The embedding apparatus 800 may include all or some of the embedding container 100, a moving unit 300, a biological-entity operation unit 400, and an introduction unit 500.

Any of the embedding containers 100 in the embodiments described above can be used as the embedding container 100 to be included in the embedding apparatus 800, depending on the purpose or the application. The embedding apparatus 800 may include only a single embedding container 100 or may include an integration of a plurality of embedding containers 100, such as integrated structure 101 or the integrated structure 102.

The moving unit 300 moves the embedding container 100. The moving unit 300 may take the embedding container 100 from the outside of the embedding apparatus 800 into the inside of the embedding apparatus 800 or may remove the embedding container 100 accommodated inside the embedding apparatus 800 to move it onto the embedding dish located outside the embedding apparatus 800. Not limited to these, the moving unit 300 may move the embedding container 100 from any location to any location according to the purpose.

The moving unit 300 may receive an input from the outside (such as an operator) to automatically move the embedding container 100 via an actuator. The embedding container 100 may be moved by the hands of an operator instead of the moving unit 300. In this case, the embedding apparatus 800 may not include the moving unit 300.

The biological-entity operation unit 400 operates the subject 115. The biological-entity operation unit 400 may cause the subject 115 to be accommodated inside the embedding container 100. For example, the biological-entity operation unit 400 is a manipulator provided with a nozzle to operate the subject 115, which is a cell. The operation of the biological-entity operation unit 400 may be automatically performed upon receiving an input from the outside (such as an operator). The nozzle may include a flow channel therein. The biological-entity operation unit 400 may include a pump to supply and/or take in a gas to/from the flow channel of the nozzle, a supporting unit to move the nozzle, and the like, and the details of the operation of the subject 115 performed by the nozzle will be described later.

The introduction unit 500 introduces the liquid 160 into the embedding container 100 and/or discharge the liquid 160 from the embedding container 100. For example, the introduction unit 500 introduces a processing solution to process the subject 115 into the embedding container 100. For example, the introduction unit 500 introduces, into the embedding container 100, an embedding agent to embed the subject 115. The liquid 160 may be introduced into the embedding container 100 and/or discharged from the embedding container 100 by the hands of an operator instead of the introduction unit 500. Introduction and/or discharge of the liquid 160 by the introduction unit 500 may be performed automatically upon receiving an input from the outside (such as an operator).

The introduction unit 500 may include a syringe to introduce the liquid into the embedding container 100. The introduction unit 500 may include a manifold to accommodate the embedding container 100. In this case, the syringe and the manifold may have the function to introduce and/or discharge the processing solution and/or the embedding agent into/from the embedding container 100, and the details will be described later.

The processing solution may be the liquid 160 that acts to fix, dehydrate, and/or degrease the subject 115. An organic solvent included in the liquid 160 may be processing solution. The processing solution may be one or more of formalin (formaldehyde, paraformaldehyde), glutaraldehyde, Bouin's solution, Carnoy's solution, methanol, ethanol, xylene, and xylene substitute, but is not limited thereto. The embedding agent may be a substance that embeds the subject 115. The organic solvent included in the liquid 160 may be an embedding agent. For example, the embedding agent is paraffin, or celloidin. The processing solution and/or the embedding agent can be used at any temperature according to the purpose. As an example, the formalin can be cooled to approximately 0°C to be used, and the paraffin can be heated to approximately 60°C to be used.

In addition to these, the embedding apparatus 800 may further include a video camera to capture images of how a specimen is created, and a computer to analyze the image file or the video file captured, and the details will be described later.

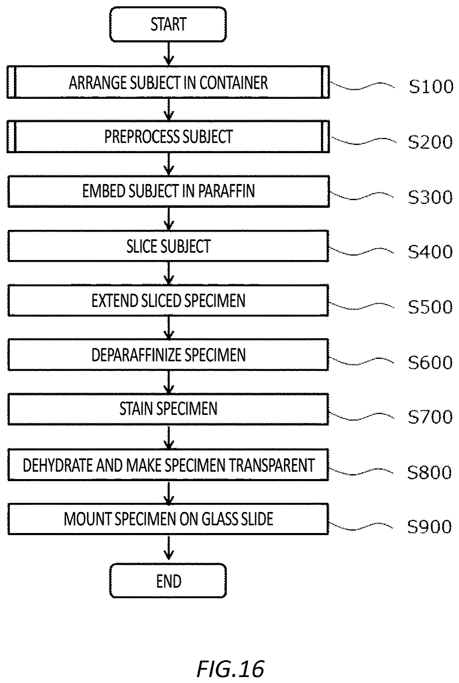

Fig. 16 shows an example flowchart of a method for preparing a specimen from a subject 115 according to the present embodiment. The subject 115 of the present embodiment can be a specimen by performing processing from S100 to S900 in Fig. 16. Note that, for convenience of description, the processing is described in a sequential manner from S100 to S900, although at least some of the processing may be performed in parallel or the steps may be reordered to be performed without departing from the spirit of the present invention.

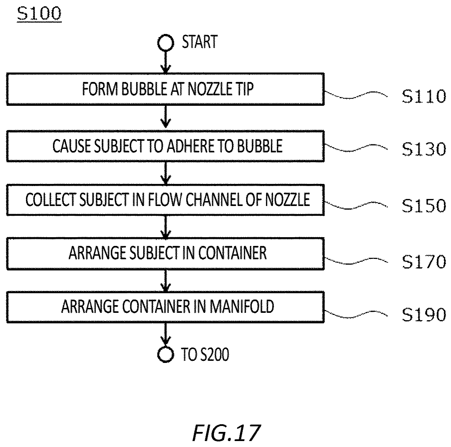

First, in S100, the embedding apparatus 800 arranges the subject 115 in the embedding container 100. S100 may be referred to as arranging. In S100, the step to arrange the subject 115 in the embedding container 100 may include steps from S110 to S190, as shown in Fig. 17.

Fig. 17 shows S100 in the flowchart. As an approach to collect the subject 115, the approach described from S110 to S150 is exemplified, although the approach is not limited to those described from S110 to S150 and the subject 115 may be collected using a known approach as long as the subject 115 can be collected.

First, in S110, the biological-entity operation unit 400 forms a bubble at the tip of the nozzle. The nozzle can cause fluid to pass inside the flow channel to operate the subject 115 that is present in the liquid 160. Sucked (taken in) or blown (supplied) fluid passes through the flow channel. The flow channel is provided to run along the longitudinal direction of the nozzle. The nozzle may be a glass tube. For example, the glass tube is molded by a known glass-molding technique such as the hand-drawn process, the Danner process, or the Vello process.

The fluid may be a gas and/or a liquid. The gas may be air and may contain moisture. The gas may be sterilized. For example, the gas passed through the nozzle is discharged into the liquid 160 to form a bubble, and the bubble can be used to operate the subject 115 that is present in the liquid 160. The flow channel may allow the subject 115 to pass therethrough along with the fluid.

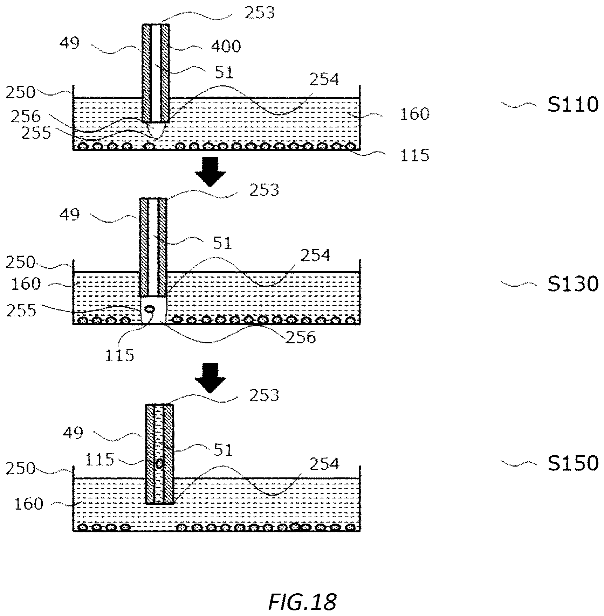

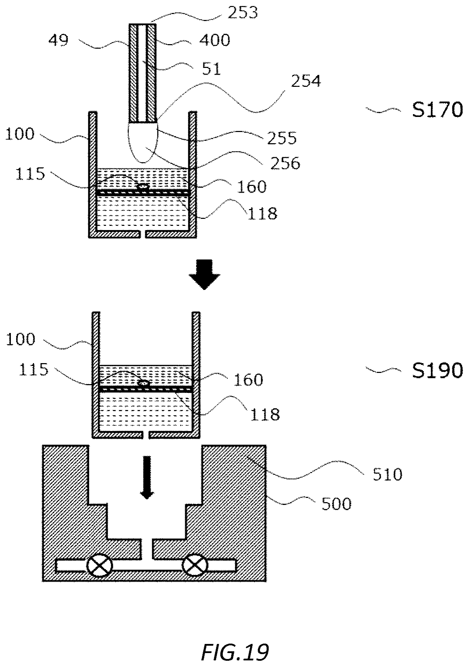

Fig. 18 and Fig. 19 illustrate each of the steps from S110 to S190 to arrange the subject 115 inside the embedding container 100 as the arranging in S100. In S110 in Fig. 18, the length of the nozzle 49 in the longitudinal direction may be 1 mm or more and 50 mm or less. The length of the nozzle 49 in the longitudinal direction may be 5 mm or more and 30 mm or less. The length of the nozzle 49 in the longitudinal direction may be 10 mm or more and 20 mm or less.

The inner diameter of the flow channel 51 may be 1 µm or more and 10000 µm or less. The inner diameter of the flow channel 51 may be 10 µm or more and 1000 µm or less. The inner diameter of the flow channel 51 may be 20 µm or more and 500 µm or less. When the inner diameter of the flow channel 51 and/or the longitudinal direction length of the nozzle 49 are within the above-described range, the nozzle 49 can hold the fluid in a certain amount or more, and thus the operation of the subject 115 becomes easy. In addition, the nozzle 49 is not too long, and thus it is not difficult to perform an operation of directing the tip portion 254 of the nozzle 49 to the intended position.

In Fig. 18 and Fig. 19, an adherent cell is shown as an example of the subject 115, although the subject 115 may be a floating cell. In addition, the same applies to the subject being a single cell or an aggregate of cells such as a spheroid. In S110 of Fig. 18, adherent cells are cultured in a solid phase on the inner bottom side of the cell culturing container 250. The adherent cells may be immersed in the liquid 160 contained in the cell culturing container 250. The liquid 160 may be a complete media, a base media, or a buffer solution. Note that, when the subject 115 is not a biological entity or when it is a dead cell, the liquid 160 is not limited to these and it may be water or an organic solvent or the like.

In S110 of Fig. 18, a pump (not shown) connected to an end 253 opposite to the tip portion 254 of the nozzle 49 supplies the gas into the flow channel 51 of the nozzle 49. This forms the bubble 256 at the tip portion 254. An operation of the adherent cell may be performed by the bubble 256 formed and remained at the tip portion 254.

Then, in S130, the biological-entity operation unit 400 causes the bubble 256 formed at the tip portion 254 of the nozzle 49 to contact the adherent cell to adhere the adherent cell to a gas-liquid interface 255 of the bubble 256. The pressure and/or volume of the gas to be supplied or taken in can be controlled by controlling the pump. This allows the size of the bubble 256 to vary, and thus allows the adherent cell in a desired range to be stripped. Note that, instead of the supporting unit moving the nozzle 49 along the surface of the solid phase, the cell culturing container 250 may be moved to strip the adherent cell from the solid phase.

Then, in S150, the adherent cell adhered to the bubble 256 is collected inside the flow channel 51 by the pump taking in the gas present in the flow channel 51 of the nozzle 49. In this manner, by using the bubble 256 formed at the tip portion 254, the adherent cell can be selectively stripped from the solid phase to be collected inside the flow channel 51. By supplying and taking in the gas from/into the flow channel 51 of the nozzle 49, the adherent cell in the liquid 160 can be easily operated by the nozzle 49. In this approach, the subject 115 can be collected without sucking an unnecessary amount of liquid 160 other than the subject 115, and thus the liquid 160 to be accommodated in the embedding container 100 along with the subject 115 can be reduced compared to known pipetting. The operation of the cell may include at least part of collecting cells ranging from a single cell to a block of cells, which is an aggregate of cells, by changing the nozzle diameter, transporting a cell while the cell remains adhered to the gas-liquid interface 255 of the bubble 256, adhesion, stripping, and pressing of the cell using the bubble.

The above description describes the case in which the subject 115 is an adherent cell, however if the subject 115 is a floating cell, the floating cell may be collected by causing the floating cell to contact with a bubble 256 formed at the tip portion 254 of the nozzle 49 and to be adhered to the gas-liquid interface 255, or by other known approaches.

Then, in S170 of Fig. 19, the supporting unit moves the nozzle 49 to bring it above the embedding container 100 and arranges the subject 115 inside the embedding container 100 (for example, on the filter 118 or on the water-absorbing material 190). When the subject 115 is arranged on the filter 118 or the water-absorbing material 190, the filter 118 or the water-absorbing material 190 is to be embedded in contact with the subject 115. By the pump supplying the gas present in the flow channel 51 of the nozzle 49, a bubble 256 with the adherent cell adhered thereto is formed at the tip portion 254 of the nozzle 49. The supporting unit may cause the nozzle 49 to bring the bubble 256 to contact with and/or be inserted into the liquid 160 inside the embedding container 100 to arrange the subject 115 inside the embedding container 100.

Although Fig. 19 shows a configuration in which no lid is provided in the upper space of the embedding container 100, there may be a configuration in which a lid of the embedding container 100 is provided with a hole having the size through which the nozzle 49 or a dispenser (for example a pipette) or the like to arrange the subject 115 inside the embedding container 100 can pass, and the nozzle 49 or the like can be inserted into the upper space of the embedding container 100 through the hole.

Then in S190, the moving unit 300 moves the embedding container 100 with the adherent cell arranged therein to accommodate it in a manifold 510 of the introduction unit 500. The embedding container 100 may be accommodated in the manifold 510 by the hands of an operator instead of the moving unit 300 moving the embedding container 100. After the embedding container 100 is accommodated in the manifold 510, the embedding apparatus 800 proceeds to step S200. Although Fig. 19 shows a configuration in which the embedding container 100 does not include a stepped portion 173 at the boundary between the upper portion 120 and the lower portion 125, it may include the stepped portion 173 at the boundary between the upper portion 120 and the lower portion 125 of the embedding container 100. The stepped portion 173 of the embedding container 100 may correspond to the shape of a stepped portion of the manifold, which will be described later, and by this, the height at the time of accommodation becomes easily determined.

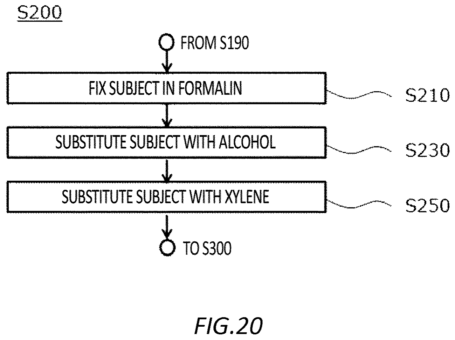

Then, in S200, the embedding apparatus 800 preprocesses the subject 115 arranged in the embedding container 100 using a processing solution. The embedding apparatus 800 may preprocess the subject 115 with the subject 115 remains arranged in the embedding container 100. S200 may be referred to as preprocessing. The preprocessing may be fixing, dehydrating, and/or degreasing the subject 115. The processing solution may be a fixative solution, a dehydrating solution and/or a degreasing solution. In S200, the preprocessing the subject 115 may include steps S210 to S250 as shown in Fig. 20.

Fig. 20 shows S200 in a flowchart. First, in S210, the introduction unit 500 introduces the fixative solution into the embedding container 100 to fix the subject 115. The fixative solution may be formalin, glutaraldehyde, Bouin's solution, Carnoy's solution or methanol. The cooled fixative solution (for example, the formalin or the like cooled to approximately 0°C) may be used.

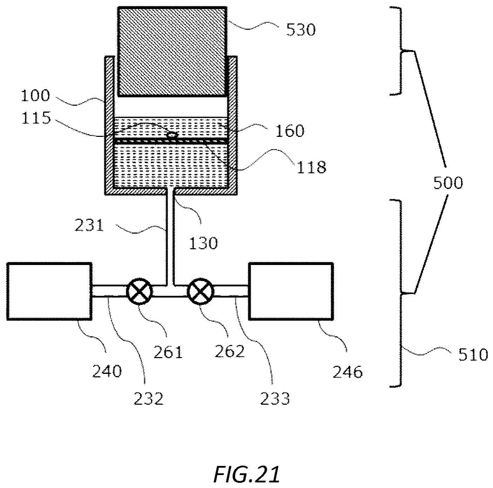

Fig. 21 illustrates, as preprocessing, how the introduction unit 500 introduces the liquid 160 such as the fixative solution into the embedding container 100. In Fig. 21, the embedding container 100 is accommodated in the manifold 510. The aperture 130 in the lower portion 125 of the embedding container 100 is connected to and communicated with a passage 231 of the manifold 510. The introduction unit 500 opens a valve 261 and closes a valve 262. Then, the introduction unit 500 arranges a syringe 530 in the upper space of the upper portion 120 of the embedding container 100, and by drawing the syringe 530 upward (in the direction away from the embedding container 100), it applies a reduced pressure (negative pressure) to the upper space and the lower space of the embedding container 100. By doing so, the fixative solution is introduced into the embedding container 100 from the fixative solution tank, which is a processing solution supply tank 240, through the passage 232 and the passage 231. The introduction unit 500 stops the operation to draw the syringe 530 upward after the sufficient amount of fixative solution to fix the subject 115 is introduced into the embedding container 100.

After a sufficient time has elapsed to fix the subject 115, the introduction unit closes the valve 261 and opens the valve 262. Then, the introduction unit 500 applies an increased pressure (positive pressure) to the upper space and the lower space of the embedding container 100 by pressing the syringe 530 downwardly (in the direction toward the embedding container 100). By doing so, the fixative solution filled in the embedding container 100 is discharged to the waste-solution tank 246 through the passage 231 and the passage 233. The introduction unit 500 stops the operation to press the syringe 530 downwardly after all or part of the fixative solution (for example, half the amount, three fourth of the amount, or all amount except that approximately required to immerse the subject 115, and so on) is discharged from the embedding container 100.

When fixing of the subject 115 is insufficient, the above-described operation to introduce the fixative solution inside the embedding container 100 and discharge it from the inside of the embedding container 100 may be performed twice or more. Although Fig. 21 shows a configuration to use the syringe 530, there may be a configuration to use a pump, instead of the syringe 530, to take in and supply the gas present in the upper space of the upper portion 120 of the embedding container 100, to apply a reduced pressure (negative pressure) and/or an increased pressure (positive pressure) to the upper space and the lower space of the embedding container 100. Although Fig. 21 shows a configuration in which the aperture 130 in the lower portion 125 of the embedding container 100 is connected to and communicated with the passage 231 of the manifold 510, there may be a configuration in which the liquid 160 is introduced into the upper space and the lower space of the embedding container 100 through an opening in the upper portion 120 of the embedding container 100 that is not provided with the aperture 130, using the nozzle 49 to take in and supply the liquid 160.

Then, in S230, the introduction unit 500 introduces the dehydrating solution into the embedding container 100 to dehydrate the subject 115. The dehydrating solution may be alcohol such as ethanol, and any concentration of ethanol such as anhydrous ethanol, 90% ethanol, 80% ethanol, or 70% ethanol can be used. The introduction of the dehydrating solution into the embedding container 100 and the discharge of the dehydrating solution from the embedding container 100 may be performed in a similar procedure to that of S210. In this case, the dehydrating solution tank may be used for the processing solution supply tank 240 and a plurality of dehydrating solution tank may be provided according to applications such as the ethanol concentrations. Also in the step of S230, the operation to introduce the dehydrating solution and discharge the dehydrating solution may be performed multiple times as required.

Then, in S250, the introduction unit 500 introduces the degreasing solution into the embedding container 100 to degrease the subject 115. The degreasing solution may be xylene. Because ethanol as the dehydrating solution and paraffin as the embedding agent are not compatible, the processing by xylene may be performed between the dehydration and the embedding. The introduction of the degreasing solution into the embedding container 100 and the discharge of the degreasing solution from the embedding container 100 may be performed in a similar procedure to that of S210. In this case, the degreasing solution tank may be used as the processing solution supply tank 240. Also in the step of S250, the operation to introduce the degreasing solution and discharge the degreasing solution may be performed multiple times as required.

If the subject 115 is greasy, the degreasing processing may be performed before the dehydration processing, and if the subject 115 is a hard tissue, a decalcification processing using an acid, a chelator, or the like may be performed before the dehydration processing. After the subject 115 is preprocessed, the embedding apparatus 800 proceeds to step S300.

Then, in S300, the embedding apparatus 800 embeds the subject 115. The embedding apparatus 800 may embed the subject 115 and the embedding container 100 as a whole, that is, along with the holding member. This operation may be referred to as embedding. As an example, the embedding apparatus 800 introduces the embedding agent into the embedding container 100 while the subject 115 remains arranged on the embedding container 100 to embed the subject 115 in the embedding container 100. This operation may be referred to as in-container embedding.

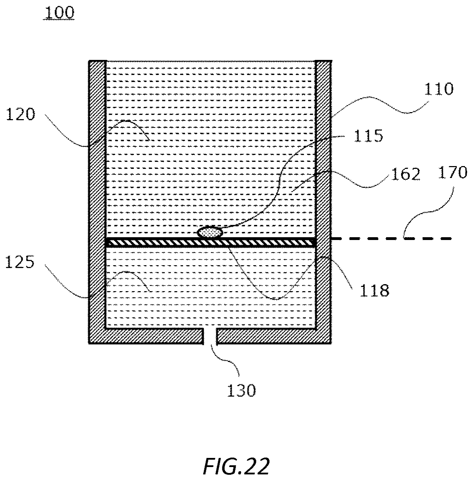

Fig. 22 shows the embedding container 100 filled with the embedding agent. Specifically, as the in-container embedding, the embedding apparatus 800 fills the embedding container 100 with the embedding agent in the similar procedure to S210 using the tank for the embedding agent (for example, paraffin 162 or celloidin) as the processing solution tank. The heated embedding agent (for example, paraffin of approximately 60°C) may be used. The embedding agent may be filled into the entire upper space and the lower space of the embedding container 100, or may be filled into at least a part of the upper space so as to immerse the subject 115 sufficiently. The embedding container 100 may be left stationary until the embedding agent is sufficiently cooled and solidified.

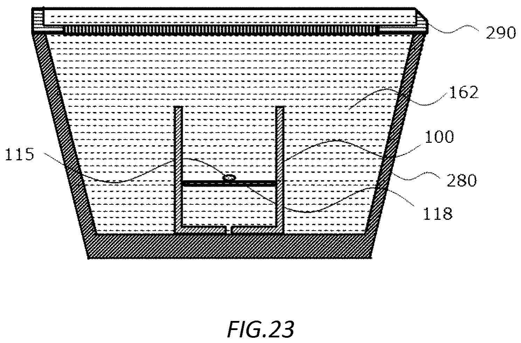

Fig. 23 shows an embedding dish 280, in which the embedding container 100 is arranged, filled with paraffin 162 as the embedding agent. In this case, the embedding agent is filled not only into the inside of the embedding container 100 but also surrounding the periphery. Specifically, as the embedding, the embedding apparatus 800 may arrange the embedding container 100 in the embedding dish 280 and attach an embedding cassette 290 on the upper portion of the embedding dish 280. Arrangement of the embedding container 100 in the embedding dish 280 may be performed by the moving unit 300 or by the hands of an operator. The embedding container 100 arranged in the embedding dish 280 may be the embedding container 100 before being filled with the embedding agent, or may be the embedding container 100 after being filled with the embedding agent in the in-container embedding. For filling the embedding agent into the embedding dish 280, the embedding agent may be filled into the embedding dish 280, in which the embedding container 100 is arranged, by the hands of an operator. For filling the embedding agent into the embedding dish 280, the embedding agent may be automatically filled into the embedding dish 280, in which the embedding container 100 is arranged, when the embedding apparatus 800 receives an input from the outside (such as an operator).

Then, in S400, the subject 115 is sliced by slicing the embedding container 100 obtained after in-container embedding and/or embedding.

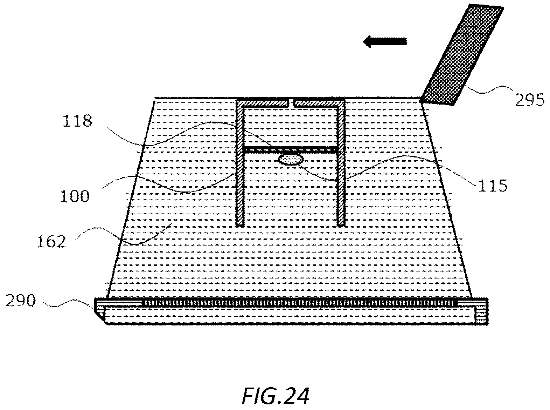

Fig. 24 illustrates how the embedding container 100 is sliced. A block of the embedding agent in which the embedding container 100 is embedded may be removed from the embedding dish 280. The removed block of the embedding agent may be placed with the embedding cassette 290 facing downward.

Then, the block of the embedding agent may be sliced using a blade 295. Here, the block of the embedding agent may be cut coarsely until the filter 118 can be visually observed on the sliced cross-section because, as shown in Fig. 24, the subject 115 is immediately below the filter 118 and obviously no subject 115 is present until then. After the appearance of the filter 118 on the cut surface, the cutting may be performed carefully because the nearby presence of the subject 115 is obvious. By repeating the slicing, a sliced piece (referred to as a first piece) including the subject 115 embedded in the embedding agent and a sliced piece (referred to as a second piece) including the filter 118 embedded in the embedding agent can be obtained. The first piece and the second piece are in proximity (adjacent) to each other in the block of the embedding agent. Accordingly, after obtaining the second piece in the course of slicing, the cutting may be performed carefully to obtain the first piece. In this manner, by coarsely or finely cutting the block of the embedding agent in which the embedding container 100 is embedded, using the presence of the filter 118 (that is, the second piece) as a guide, a specimen of the subject 115 (that is, the first piece) can be created in a simple manner without losing sight of the subject 115.

As already stated, instead of/in addition to the presence of the filter 118, one or more of a predetermined value of the cross-sectional area of the cross-section, the presence of the stepped portion 173, the presence of the water-absorbing material 190, and the color change of the water-absorbing material 190 or the like may be used as the guide for the cutting.

The embedding container 100 may be sliced by a means such as a microtome or by the hands of an operator. The embedding container 100 may be sliced automatically. For example, the embedding apparatus 800 automatically captures images of a process of slicing the embedding container 100 in time sequence by a video camera provided in the embedding apparatus 800. The embedding apparatus 800 may perform image analysis on the images of the cross-sections of the embedding container 100 captured in time sequence, by a computer provided in the embedding apparatus 800.

The computer provided in the embedding apparatus 800 may analyze the plurality of images captured in time sequence and control the blade 295 so that it cuts the embedding container 100 coarsely until the images of the cross-section satisfy a predetermined condition (for example, the filter 118 appears on the cross-section, or the area of the cross-section of the container becomes equal to or more/less than the threshold value, and so on) and it cuts the embedding container 100 carefully once the filter 118 appears on the cross-section.

The expression "cut coarsely" may indicate a relatively thick slice to be cut (for example, more than 10 µm, more than 15 µm, more than 20 µm, more than 50 µm, or more than 100 µm, and so on). The expression "cut carefully" may indicate a relatively thin slice to be cut compared to that "cut coarsely" and it may be for example, 1 µm or less, 2 µm or less, 3 µm or less, 4 µm or less, 5 µm or less, 6 µm or less, 7 µm or less, 8 µm or less, 9 µm or less, or 10 µm or less, and so on.

The expression "cut coarsely" may indicate cutting at a relatively fast speed (for example, five or more, six or more, seven or more, eight or more, nine or more, or ten or more specimens are obtained by cutting per one minute, and so on). The expression "cut carefully" may indicate cutting at a relatively slow speed compared to "cut coarsely" (for example, four or less, three or less, two or less, or one or less specimens are obtained by cutting per one minute, and so on).

For example, the computer provided in the embedding apparatus 800 calculates the value of the cross-sectional area of the cross-section appeared in the plurality of images captured in time sequence and controls the blade 295 so that it cuts the embedding container 100 coarsely until the predetermined value of the cross-sectional area of the cross-section is reached and it cuts the embedding container 100 carefully when the predetermined value of the cross-sectional area of the cross-section is reached. For example, the computer provided in the embedding apparatus 800 may analyze the plurality of images captured in time sequence and control the blade 295 so that it cuts the embedding container 100 coarsely until the water-absorbing material 190 appears on the cross-section and it cuts the embedding container 100 carefully once the water-absorbing material 190 appears on the cross-section. For example, the computer provided in the embedding apparatus 800 may analyze the plurality of images captured in time sequence and control the blade 295 so that it cuts the embedding container 100 coarsely until a color of the water-absorbing material 190 appeared on the cross-section changes and it cuts the embedding container 100 carefully once the color of the water-absorbing material 190 appeared on the cross-section changes.

When the embedding container 100 is sliced by the hands of an operator, the computer provided in the embedding apparatus 800 may present to the operator that the filter 118 has appeared on the cross-section, through the display provided in the embedding apparatus 800. Not limited to this, when the embedding container 100 is sliced by the hands of an operator, the computer provided in the embedding apparatus 800 may present to the operator that the value of the cross-sectional area has reached the predetermined value, that the stepped portion 173 has appeared, that the water-absorbing material 190 has appeared, and/or that the color of the water-absorbing material 190 has changed, through the display provided in the embedding apparatus 800. This allows the embedding apparatus 800 to provide the guide for the operator to cut the embedding container 100.

The above-described analyze by the computer may be performed by a program that includes instructions therein. When performed by a processor or a programmable circuit, the instructions may include a step to cause the processor or the programmable circuit to perform the above-described analysis.

Then, in S500, the sliced piece (specimen) including the subject 115 is extended. The specimen may be extended by being moved into a water bath to float on the water. Insufficient extension is not preferable as it causes wrinkles on the specimen. The specimen extended sufficiently may be placed on a glass slide to dry the moisture.

Then, in S600, the specimen is deparaffinized. Insufficient deparaffinization results in insufficient staining because the paraffin remains contained in the specimen. The deparaffinization can be performed by a known method. For example, the deparaffinization is performed by immersing the glass slide with the specimen thereon in a sequential manner in dyeing vats each of which is filled with xylene, 100% ethanol, and 70% ethanol.

Then, in S700, the specimen is stained. The specimen may be stained by a known staining method such as hematoxylin and eosin stain (HE stain) Kluver-Barrera stain (KB stain), Fontana-Masson stain, Giemsa stain, Gram stain, or toluidine blue stain. For example, the HE stain is performed by immersing the deparaffinized specimen in a sequential manner in dyeing vats each of which is filled with hematoxylin solution and eosin solution.

Then, in S800, the specimen is dehydrated and made transparent. The specimen may be dehydrated and made transparent by a known method. For example, the specimen may be dehydrated and made transparent by immersing the stained specimen in a sequential manner in dyeing vats each of which is filled with 70% ethanol, 100% ethanol, and xylene.

Then, in S900, the specimen is mounted on the glass slide. The specimen may be mounted by a known method. For example, the mounting of the specimen may be performed by placing a mounting agent on a glass slide, on which the specimen dehydrated and made transparent is placed, and then placing a cover glass thereon. The mounting agent used may be one that includes glycerin or one that is commercially available. The periphery of the cover glass may be sealed by a commercially available manicure or the like. In this manner, the glass slide created through the steps from S100 to S900 may be used for microscopic observation or the like.

Now, modification examples of the method for preparing a specimen from the subject 115 will be shown. The modification examples describe the specimen preparation from the integrated structure of the embedding containers 100 with the subject 115 thereon, as shown in Figs. 12 and 13.

### (Modification example 1)

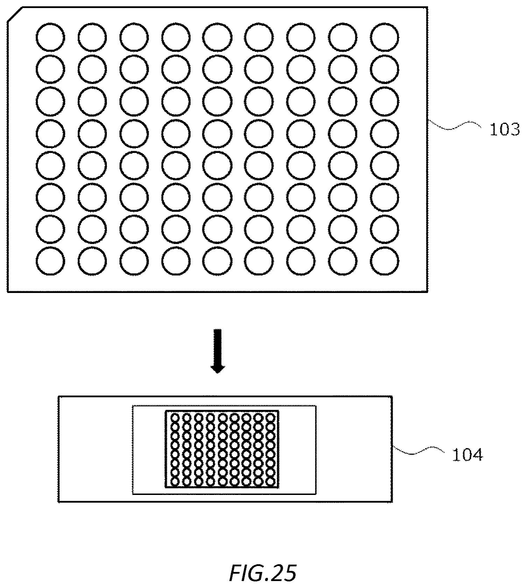

The modification example 1 in Fig. 25 shows a configuration in which the subjects arranged on a cell culture plate 103 are accommodated in one glass slide 104 as a specimen. In Fig. 25, the cell culture plate 103 has ninety-six wells, although it is not limited to this and the cell culture plate may have six wells, twelve wells, or twenty-four wells or the like.

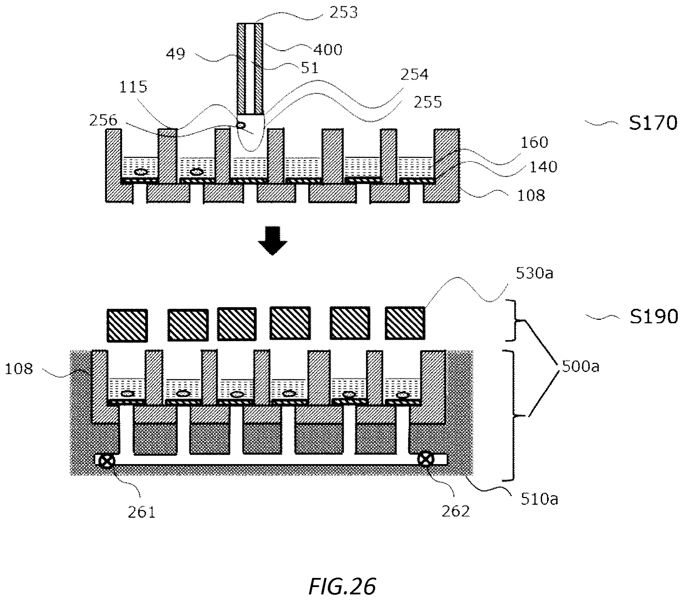

Fig. 26 illustrates the steps of S170 and S190 in the modification example 1. The steps from S110 to S150 in the modification example 1 may be performed by the methods already described. In S170, the supporting unit moves the nozzle 49 to bring it above the embedding container cassette 108 and arrange the subject 115 inside the embedding container cassette 108 (for example, on the filter 118). Here, the embedding container cassette 108 may be a ninety-six-well type of the integrated structure of the embedding containers. The embedding container cassette 108 may have the size that can be accommodated in the glass slide 104. For example, when the size of the glass slide 104 is approximately 26 mm in length and approximately 76 mm in width, the size of the embedding container cassette 108 is approximately 24 mm in length and approximately 37 mm in width.

In S170, by the pump supplying the gas present in the flow channel 51 of the nozzle 49, a bubble 256 with the subject 115 adhered thereto is formed at the tip portion 254 of the nozzle 49. The supporting unit may cause nozzle 49 to bring the bubble 256 to contact with and/or to be inserted into the liquid 160 inside the embedding container cassette 108 to arrange the subject 115 inside any of the wells in the embedding container cassette 108. The subjects 115 cultured (or immersed) inside the cell culture plate 103 may each be arranged in a corresponding well in the embedding container cassette 108.

Then, in S190, the moving unit 300 moves the embedding container cassette 108 with the subject 115 arranged therein to accommodate it in a manifold 510a of the introduction unit 500a. The embedding container cassette 108 may be accommodated in the manifold 510a by the hands of an operator instead of the moving unit 300 moving the embedding container cassette 108. Here, the manifold 510a and the syringe 530a may each be the manifold and the syringe for the integrated structure.

For example, the manifold 510a and the syringe 530a each have ninety-six manifolds 510 and syringes 530 shown in Fig. 21, respectively, arrayed (in eight rows and twelve columns). The manifold 510a and the syringe 530a used are not limited to these and may be those that have the integrated structure corresponding to the cell culture plate 103. After the embedding container cassette 108 is accommodated in the manifold 510a, the embedding apparatus 800 proceeds to step S200. The steps after S200 may be performed by the method already described.

The modification example 1 shown in Fig. 25 and Fig. 26 is convenient to observe the specimens at a time because the specimens of the subjects 115 are collected on one glass slide 104 by putting all the subjects 115 together on one well plate and arraying them like an array pattern on the glass slide 104.

### (Modification example 2)

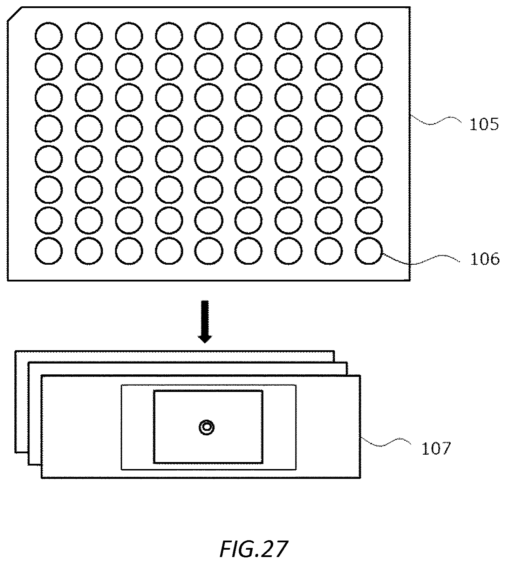

The modification example 2 in Fig. 27 shows a configuration in which each subject arranged in an individual embedding container 106 included in the integrated structure 105 is accommodated in one of the separate glass slides 107. In Fig. 27, the integrated structure 105 has ninety-six wells (including ninety-six embedding containers 106), although it is not limited to this and may have six wells, twelve wells, or twenty-four wells or the like.

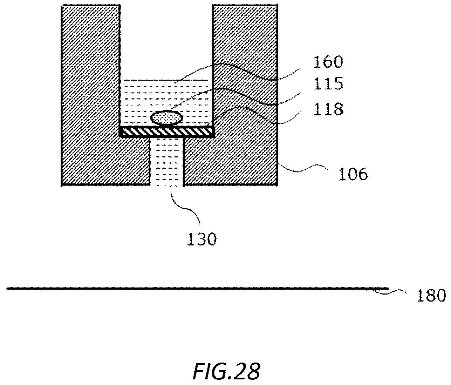

Fig. 28 shows an example cross-sectional view of the individual embedding container 106 included in the integrated structure 105, cut along a cross-section perpendicular to the installation surface 180. The individual embedding container 106 is provided with the aperture 130 on the lower portion 125 and the filter 118 on the boundary between the upper portion 120 and the lower portion 125, and the subject 115 is arranged on the filter 118. The subject 115 may be cultured inside the embedding container 106 filled with the culture medium as the liquid 160.

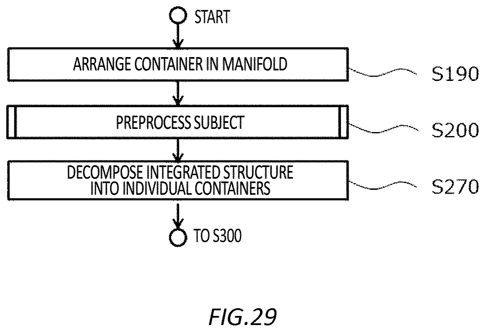

Fig. 29 illustrates the steps from S100 to S270 in the modification example 2. In the modification example 2, the operations from S110 to S170 shown in Fig. 17 may not necessarily be performed if the subject 115 is cultured (or immersed) in the individual embedding container 106, because the integrated structure 105 includes the individual embedding container 106.

First, in S190, the moving unit 300 moves the integrated structure 105 with the subject 115 arranged therein to accommodate it in a manifold 510b of the introduction unit 500b.

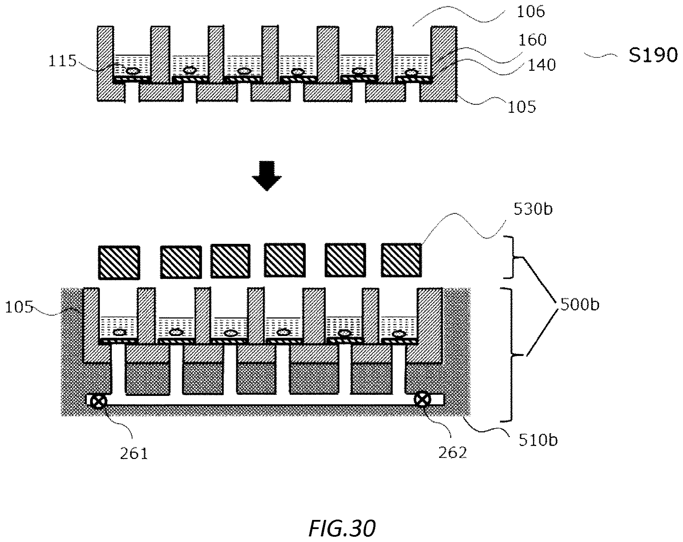

Fig. 30 illustrates the step of S190 in the modification example 2. In the step of S190, the moving unit 300 moves the integrated structure 105 with the subject 115 arranged therein to accommodate it in a manifold 510b of the introduction unit 500b. For example, the step of S190 is performed in a similar way to the step of S190 of the modification example 1 shown in Fig. 26. The integrated structure 105 may be accommodated in the manifold 510b by the hands of an operator instead of the moving unit 300 moving the integrated structure 105. Here, the manifold 510b and the syringe 530b may each be the manifold and the syringe for the integrated structure. After the integrated structure 105 is accommodated in the manifold 510b, the embedding apparatus 800 proceeds to step S200.

The steps after S200 may be performed by the method already described. Then, in S270, the embedding apparatus 800 disassembles the integrated structure 105 into the individual embedding containers 106. For example, in the integrated structure 105, perforations may be formed between the individual embedding containers 106 to disassemble the integrated structure 105 into the individual embedding containers 106 at the perforations. If the perforations are not formed in the integrated structure 105, the integrated structure 105 may be disassembled into the individual embedding containers 106 with scissors or the like. After S270, the steps of S300 and thereafter may be performed on the individual embedding container 106 by the method already described.

The modification example 2 shown in Figs. 27 to 30 is simple to operate because the embedding containers 106 are integrated in one integrated structure 105 and the culturing and preprocessing can be performed on the integrated structure 105 as a whole at a time. Although, in the modification example 2, the specimen is created using one glass slide per the subject 115 arranged in the individual embedding container 106, the specimen may be collectively created using one glass slide per a plurality of subjects 115.

In another embodiment of the present invention, there is disclosed a method for cutting the embedding container 106 coarsely until a feature as a guide appears on a cut surface and cutting it carefully once the feature as the guide has appeared on the cut surface in the step S400 for cutting the embedding container 106 to slice the subject 115. Here, the expression "cut coarsely" may indicate a relatively thick slice to be cut (for example, more than 10 µm, more than 15 µm, more than 20 µm, more than 50 µm, or more than 100 µm, and so on), whereas the expression "cut carefully" may indicate a relatively thin slice to be cut compared to that "cut coarsely" (for example, 1 µm or less, 2 µm or less, 3 µm or less, 4 µm or less, 5 µm or less, 6 µm or less, 7 µm or less, 8 µm or less, 9 µm or less, or 10 µm or less, and so on).

The expression "cut coarsely" may indicate cutting at a relatively fast speed (for example, five or more, six or more, seven or more, eight or more, nine or more, or ten or more specimens are obtained by cutting per one minute, and so on), whereas the expression "cut carefully" may indicate cutting at a relatively slow speed compared to "cut coarsely" (for example, four or less, three or less, two or less, one or less specimens are obtained by cutting per one minute, and so on). The feature as the guide may be one or more of the presence of the filter 118, a predetermined value of the cross-sectional area of the cross-section, the presence of the stepped portion 173, the presence of the water-absorbing material 190, and the color change of the water-absorbing material 190 or the like.

In another embodiment of the present invention, there is disclosed a cutting method in which the cross-section of the embedding container 100 in addition to that of the subject 115 appears on the cut surface in the step S400 for cutting the embedding container 106 to slice the subject 115. In the present invention, the subject 115 included in the embedding container 100 is cut as a whole, and thus the cross-section of the embedding container 100 appears on the cut surface. The cross-section of the embedding container 100 may be a closed geometrical figure (for example, a continuous circle or the like) or may be an open geometrical figure (for example, a partially disconnected circle, or the like).

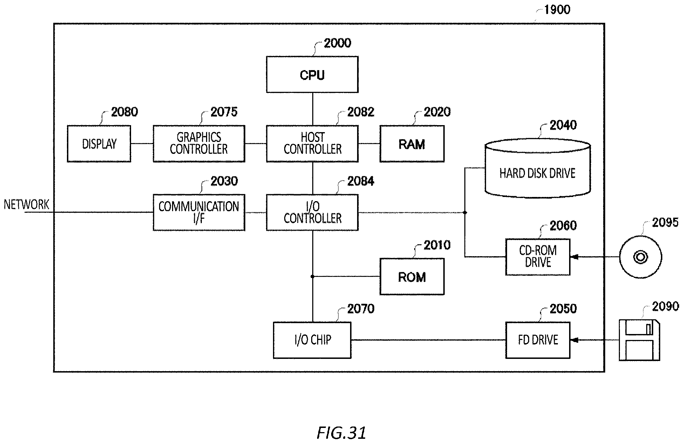

Fig. 31 shows an example of a hardware configuration of a computer 1900 of the embedding apparatus 800 that performs the image analysis in the step of S400. The computer 1900 according to the present embodiment includes: a CPU-peripheral portion having a CPU 2000, a RAM 2020, a graphics controller 2075, and a display apparatus 2080 interconnected by a host controller 2082; and an input/output unit having communication interface 2030, a hard disk drive 2040, and a CD-ROM drive 2060 connected to the host controller 2082 by an input/output controller 2084; and a legacy input/output unit having a ROM 2010, a flexible disk drive 2050, and an input/output chip 2070 connected to the input/output controller 2084.

The host controller 2082 connects the RAM 2020 with the CPU 2000 and the graphics controller 2075 accessing the RAM 2020 at a high transfer rate. The CPU 2000 operates based on programs stored in the ROM 2010 and the RAM 2020, and controls each unit. The graphics controller 2075 is configured to acquire image data generated by the CPU 2000 or the like on a frame buffer provided inside the RAM 2020 and display the image data on the display apparatus 2080. Alternatively, the graphics controller 2075 may include therein a frame buffer storing the image data generated by the CPU 2000 or the like. Various information generated (for example, the images of the cut surface, or the like) can be displayed on the display 2080.

The input/output controller 2084 connects the communication interface 2030, the hard disk drive 2040, and the CD-ROM drive 2060 which are relatively fast input/output apparatuses to the host controller 2082. The communication interface 2030 is configured to communicate with other apparatuses via a network by wire or wirelessly. In addition, the communication interface is configured to function as hardware to perform communications. The hard disk drive 2040 stores a program and data to be used by the CPU 2000 in the computer 1900. The CD-ROM drive 2060 is configured to read a program or data from the CD-ROM 2095 and provide the hard disk drive 2040 through the RAM 2020.

In addition, the ROM 2010, and the flexible disk drive 2050 and input/output chip 2070, which are relatively low-speed input/output apparatuses, are connected to the input/output controller 2084. The ROM 2010 stores a boot program performed when the computer 1900 starts up, and/or a program relying on the hardware of the computer 1900, and the like. The flexible disk drive 2050 is configured to read out a program or data from the flexible disk 2090, and provide it to the hard disk drive 2040 via the RAM 2020. The input/output chip 2070 connects the flexible disk drive 2050 to the input/output controller 2084, and connects various types of input/output apparatuses to the input/output controller 2084, for example, via a parallel port, a serial port, a keyboard port, a mouse port, or the like.

The program provided to the hard disk drive 2040 via the RAM 2020 is stored in a recording medium, such as the flexible disk 2090, the CD-ROM 2095, or an IC card, and provided by a user. The program is read out from the recording medium, installed on the hard disk drive 2040 in the computer 1900 via the RAM 2020, and executed in the CPU 2000.

The programs that are installed in the computer 1900 and that cause the computer 1900 to function as the computer for the image analysis in the embedding apparatus 800 may work on the CPU 2000 or the like to cause it function as the computer in the embedding apparatus 800.

The information processing written in these programs, when being read in the computer 1900, functions as an image analysis unit that is specific means in which software and the various hardware resources described above are cooperated. Then, by achieving the computation or processing of the information according to the intended use of the computer 1900 in the present embodiment through these specific means, a specific computer for the embedding apparatus 800 according to the intended use is constructed.

As an example, when communication is performed between the computer 1900 and an external apparatus or the like, the CPU 2000 is configured to execute the communication program loaded on the RAM 2020, and provide the communication interface 2030 with communication processing instructions based on the content of the processing written in the communication program. In response to the control by the CPU 2000, the communication interface 2030 is configured to read out the transmission data stored in the transmission buffer region or the like provided on the storage apparatus, such as the RAM 2020, the hard disk drive 2040, the flexible disk 2090, the CD-ROM 2095, or the like, and transmit this transmission data to the network, and write reception data received from the network onto a reception buffer region or the like provided on the storage apparatus. In this manner, the communication interface 2030 may transfer transmission/reception data to the storage apparatus through DMA (Direct Memory Access) scheme, and alternatively, the CPU 2000 may transfer the transmission/reception data by reading the data from the storage apparatus or communication interface 2030 that are the origins of transfer, and writing the data onto the communication interface 2030 or the storage apparatus that are the destinations of transfer.

In addition, the CPU 2000 causes all or necessary portions of files or database or the like stored in an external storage apparatus such as the hard disk drive 2040, the CD-ROM drive 2060 (CD-ROM 2095), and the flexible disk drive 2050 (flexible disk 2090) to be read into the RAM 2020 by means of DMA transfer or the like, and then performs various types of processing on the data in the RAM 2020. The CPU 2000 writes back the data on which processing is completed into an external storage apparatus by DMA transfer or the like. In such processing, the RAM 2020 can be regarded as carrying contents of the external storage apparatus temporarily, and thus the RAM 2020, the external storage apparatus and the like are collectively called a memory, a recording unit, a storage apparatus or the like in the present embodiment.

Here, the storage apparatus or the like stores, as required, the information, such as video image data, for example, required for information processing of the image analysis and supplies, as required, the data to each component of the computer in the embedding apparatus 800.

Various types of information such as various types of programs, data, tables, databases or the like in the present embodiment according to the present embodiment are stored on such a storage apparatus, and are subjected to information processing. Note that, the CPU 2000 can carry a part of the RAM 2020 in a cache memory and read from or write to the cache memory. In such a configuration as well, the cache memory serves a part of the function of the RAM 2020, and accordingly the cache memory is also included with the RAM 2020, the memory, and/or the storage apparatus in the present embodiment, except when it is shown with distinction.

In addition, the CPU 2000 is configured to execute various types of processing including various types of computations, information processing, conditional determination, information search/replacement, or the like described in the present embodiment for the data read from the RAM 2020, as specified by the instruction sequence of the program, and writes the result back onto the RAM 2020. For example, when performing conditional determination, the CPU 2000 compares various types of variables shown in the present embodiment to determine whether they satisfy conditions such as being larger than, smaller than, equal to or greater than, less than or equal to, equal to or like other variables or constants, and if a condition is satisfied (or if it is not satisfied) branches to a different instruction sequence or calls up a subroutine.

In addition, the CPU 2000 can search for information stored in a file in the storage apparatus or the database, or the like. For example, if a plurality of entries, each having an attribute value of a second attribute associated with an attribute value of a first attribute, are stored in a storage apparatus, the CPU 2000 searches, from among the plurality of entries stored in the storage apparatus, an entry having an attribute value of the first attribute that matches a specified condition, and reads out the attribute value of the second attribute stored in the entry, and it is thereby possible to obtain the attribute value of the second attribute associated with the first attribute that satisfies a predetermined condition.

The programs described above may be stored in an external recording medium. As a recording medium, other than the flexible disk 2090 and the CD-ROM 2095, an optical recording medium such as DVD or CD, a magneto-optical recording medium such as MO, a tape medium, a semiconductor memory, such as IC card, or the like can be used. Also, a storage apparatus such as a hard disk or RAM that is provided with a server system connected to the Internet or a specialized communication network may be used as the recording medium to provide the programs to the computer 1900 via the network.

Although the present disclosure shows the configuration in which the computer in the embedding apparatus 800 includes the CPU 2000 as the processor, a type of the processor is not particularly limited. For example, as a processor, GPU, ASIA, FPGA or the like can be used appropriately. In addition, although the present disclosure shows the configuration in which the computer for the image analysis in the embedding apparatus 800 includes the hard disk drive 2040 as an auxiliary storage apparatus, a type of the auxiliary storage apparatus is not particularly limited. For example, instead of the hard disk drive 2040 or in addition to the hard disk drive 2040, another storage apparatus such as a solid state drive may be used.

While the present invention has been described by way of the embodiments, the technical scope of the present invention is not limited to the above described embodiments. It is apparent to persons skilled in the art that various alterations or improvements can be made to the above described embodiments. It is also apparent from the scope of the claims that the embodiments added with such alterations or improvements can be included in the technical scope of the present invention.

Various processing of the operations, procedures, steps, and stages of an apparatus, system and method shown in the claims, specifications, or diagrams can be achieved by being performed in any order unless the order is indicated by "prior to," "before," or the like and unless the output from a previous process is used in a later process. Even if the process flow is described by using phrases such as "first", "then" or the like in the scope of the claims, embodiments, or diagrams, it does not necessarily mean that the process must be performed in this order.

### EXPLANATION OF REFERENCES

49: nozzle;
51: flow channel;
100: embedding container;
100a: embedding container;
100b: embedding container;
100c: embedding container;
100d: embedding container;
100e: embedding container;
100f: embedding container;
100g: embedding container;
100h: embedding container;
100i: embedding container;
100j: embedding container;
100k: embedding container;
100I: embedding container;
100m: embedding container;
101: integrated structure;
102: integrated structure;
103: cell culture plate
104: glass slide;
105: integrated structure;
106: embedding container;
107: glass slide;
108: embedding container cassette;
110: container body;
115: subject;
118: filter;
118a: filter;
118b: filter;
120: upper portion;
125: lower portion;
130: aperture;
131: passage;
132: passage;
160: liquid;
162: paraffin;
170: proximate plane;
172: protrusion;
173: stepped portion;
175: wall;
176: projection;
178: lid;
180: installation surface;
190: water-absorbing material;
196: outer periphery portion;
198: intermediate portion;
231: passage;
232: passage;
233: passage;
240: processing solution supply tank;
246: waste-solution tank;
250: cell culturing container;
253: end;
254: tip portion;
255: gas-liquid interface;
256: bubble;
261: valve;
262: valve;
280: embedding dish;
290: embedding cassette;
295: blade;
300: moving unit;
400: biological-entity operation unit;
500: introduction unit;
500a: introduction unit;
500b: introduction unit;
510: manifold;
510a: manifold;
510b: manifold;
530: syringe;
530a: syringe;
530b: syringe;
800: embedding apparatus;
1900: computer;
2000: CPU;
2010: ROM;
2020: RAM;
2030: communication interface,
2040: hard disk drive;
2050: flexible disk drive;
2060: CD-ROM drive;
2070: input/output chip;
2075: graphics controller;
2080: display;
2082: host controller;
2084: input/output controller;
2090: flexible disk;
2095: CD-ROM.

## Claims

1. An embedding container which accommodates a subject to be embedded, comprising:
a holding member which holds the subject and through which an embedding agent to embed the subject can pass, wherein
the holding member is embedded along with the subject by the embedding agent.

2. The embedding container according to claim 1, wherein
the holding member is embedded in a state in which it is in contact with the subject.

3. The embedding container according to claim 1, wherein
the embedding container includes an upper portion which defines an upper space and a lower portion which defines a lower space relative to the holding member.

4. The embedding container according to claim 3, wherein
the upper portion has an open shape which is open outwardly.

5. The embedding container according to claim 3, wherein
the lower portion has an aperture which is connectable to outside of the embedding container.

6. The embedding container according to claim 1, wherein
the holding member has a first porous member.

7. The embedding container according to claim 6, further comprising:
a second porous member at a position opposite to the first porous member, with the subject sandwiched therebetween.

8. The embedding container according to claim 6, wherein
a thickness of the first porous member in a direction perpendicular to an installation surface on which the embedding container is installed is 100 µm or less.

9. The embedding container according to claim 6, wherein
the embedding container includes an upper portion which defines an upper space and a lower portion which defines a lower space relative to the holding member,
a circumferential length of the lower portion is different from a circumferential length of the upper portion, and
thus a stepped portion is formed at a boundary between the upper portion and the lower portion, and the first porous member is arranged on the stepped portion.

10. The embedding container according to claim 3, wherein
an inner diameter of the embedding container increases gradually as the lower space is closer to the upper portion along a direction perpendicular to an installation surface on which the embedding container is installed.

11. The embedding container according to claim 3, wherein
an inner diameter of the embedding container decreases gradually as the upper space is closer to the lower portion along a direction perpendicular to an installation surface on which the embedding container is installed.

12. The embedding container according to claim 3, wherein
a height of the upper portion is 3 mm or more and 20 mm or less,
a height of the lower portion is 0.2 mm or more and 3 mm or less, and
an inner diameter of the embedding container is 0.5 mm or more and 6 mm or less.

13. The embedding container according to claim 3, wherein
a plurality of upper spaces, each being identical to the upper space, are integrally arranged in a planar manner.

14. The embedding container according to claim 13, wherein
a honeycomb structure is formed by the upper spaces integrally arranged in the planar manner.

15. The embedding container according to claim 1, wherein
the embedding container is formed of at least one or more of plastic, paper, wood, or fiber.

16. The embedding container according to claim 1, wherein
the subject includes at least one of a cell, an aggregate of cells, a biological tissue, an organism, a fungus, or an alga.

17. The embedding container according to claim 1, further comprising:
an outer periphery portion which surrounds an outer periphery of the embedding container, wherein
the outer periphery portion includes a plane that is not perpendicular to a direction in which the embedding container is cut.

18. The embedding container according to claim 17, wherein
the outer periphery portion includes, between itself and the embedding container, an intermediate portion which extends in a radial direction of the embedding container, and
the intermediate portion is a region extending 3 mm or more relative to a direction in which the embedding container is cut.

19. The embedding container according to claim 6, wherein
the embedding container is sliced along with the subject to generate a first piece including the embedding container and the first porous member and a second piece including the embedding container and the subject.

20. An embedding method, comprising:
a step for arranging the subject in the embedding container according to any one of claims 1 to 19; and
a step for embedding the subject and the embedding container as a whole.

21. The embedding method according to claim 20, further comprising:
after the step for arranging and before the step for embedding, a step for preprocessing the subject by introducing a processing solution into the embedding container while the subject remains arranged in the embedding container.

22. The embedding method according to claim 21, further comprising:
after the step for preprocessing and before the step for embedding, a step for performing in-container embedding of the subject in the embedding container by introducing an embedding agent into the embedding container while the subject remains arranged in the embedding container.

23. An embedding apparatus, comprising:
a moving unit which moves the embedding container according to any one of claims 1 to 19; and
an introduction unit which introduces a processing solution and/or an embedding agent into the embedding container.
